Europäisches Patentamt

European Patent Office

Office européen des brevets

(11) Publication number: **0 474 311 A1**

# EUROPEAN PATENT APPLICATION

(21) Application number: **91202277.9**

(22) Date of filing: **05.09.91**

(51) Int. Cl.⁵: **G11B 7/24**, G11B 7/26

(30) Priority: **06.09.90 JP 234373/90**
**06.11.90 JP 298803/90**
**06.11.90 JP 298804/90**
**03.07.91 JP 188239/91**

(43) Date of publication of application:
**11.03.92 Bulletin 92/11**

(84) Designated Contracting States:
**NL**

(71) Applicant: **Hitachi Maxell Ltd.**
**1-88, Ushitora-1-chome, Ibaraki-shi**
**Osaka-fu(JP)**

(72) Inventor: **Tamura, Reiji**
**1468-5, Furumagi, Ishigemachi**
**Yuki-gun, Ibaraki-ken(JP)**
Inventor: **Ota, Norio**
**3-14, Kubogaoka-3-chome, Moriyamachi**
**Kitasoma-gun, Ibara-ken(JP)**
Inventor: **Yoshihiro, Masashi**
**1468-5, Furumagi, Ishigemachi**
**Yuki-gun, Ibaraki-ken(JP)**
Inventor: **Yusa, Atsushi**
**1468-5, Furumagi, Ishigemachi**
**Yuki-gun, Ibaraki-ken(JP)**
Inventor: **Kamezaki, Hisamitsu**
**66-9, Nakamichinishi, Babayaono,**
**Ishigemachi**
**Yuki-gun, Ibaraki-ken(JP)**

(74) Representative: **Smulders, Theodorus A.H.J.,**
**Ir. et al**
**Vereenigde Octrooibureaux, Nieuwe**
**Parklaan 97**
**NL-2587 BN Den Haag(NL)**

(54) **Optical data recording medium, method for writing and reading data and apparatus for recording data.**

(57) An optical data recording medium being suitable for recording signals which can be played back with a CD player or a VD player and having excellent environmental resistance and high reliability, which has a recording layer having an alloy portion composed mainly of at least one element selected from the [Au, Ag, Al and Cu] element group at least in part in the film surface direction and being formed on a signal surface of a substrate directly or through a thermal deformation layer composed from a substance having lower heat resistance than the substrate, and data is written once by scanning light energy in a pulse form along recorded track to cause a thermal change such as a change in the atomic arrangement, a fusion-induced mixing phenomenon, a deformation, formation of a cavity, etc., in part of the recording layer which has been scanned with high-level light energy, with or without a deformation of the substrate or the thermal deformation layer

FIG. I

EP 0 474 311 A1

The present invention relates to an optical data recording medium which permits real-time recording of signals FM-modulated from analog signals such as an image, voice, etc., computer data signals, and digital signals such as facsimile signals, digital audio signals, etc., by means of irradiation with light energy of laser light, electron beams, etc., which are intensity-modulated in a pulse form; a method for writing and reading data on the above optical recording medium; and an apparatus for recording data on the above optical data recording medium.

As an increasing number of compact disk (CD) players and video disk (VD) players are used, an optical data recording medium attracts attention, which enables users to freely write digital signals or digital video signals once and play back the signals with a CD player or a VD player.

A variety of optical data recording media having a thin layer (recording layer) formed from a heat-mode recording material on a substrate are conventionally available, in which data can be recorded by means of optical and thermal effects of the recording layer. Typical examples of such media are a medium in which a recording thin layer formed of a metal layer composed mainly of Te, Bi, etc., or a organic dye material layer composed of cyanine, etc., is deformed, sublimated or evaporated to write data; a medium in which the phase transition (also called "phase change" in some cases) of a Te-Ge system, As-Te-Ge system, Te-O system, or the like is utilized; a medium in which a change in the atomic arrangement such as photodarkening, etc., is utilized; and the like. Further, recording layers formed from an alloy containing Au, Ag, etc., are also described in Japanese Laid-open Utility Publication No. 54-111106, Japanese Laid-open Patent Publication No. 62-183042, etc.

Further, with the increasing spread of CD type optical disc in recent years (CD: Compact Disc), attempts are being vigorously made to develop a write once type optical data recording CD, so-called a writable CD, which has a high reflectance and which can give output signals according to CD format when data is read. A conventionally proposed write once optical data recording CD is produced by consecutively forming an organic dyestuff layer, a metal reflection layer and a UV-curable resin layer as a protection layer on the signal surface of a transparent substrate as described, e.g. in Japanese Laid-open Patent Publication No. 2-168446. Such a write once optical data recording CD has characteristic features in that data is recorded by a method in which laser light is transduced to heat when absorbed into the organic dye compound layer and owing to this heat, not only the optical properties of the organic dye compound layer are changed due to a change in the organic dye compound constituting the organic dye compound layer, but also part of the transparent substrate which is an underground of the organic dye compound layer is deformed.

Meanwhile, in order to play back signals with a CD or VD player, it is necessary to use an optical data recording medium which satisfies the conditions of such a player on reflectance, signal modulation factor, etc. For example, when an optical data recording medium is used with a CD player, the optical data recording medium is required to satisfy the conditions that the reflectance (ratio of a quantity of light returned to a detector to a quantity of light directed to an optical data recording medium) is not less than 70%, that the signal modulation factor when a 11T signal is recorded is not less than 60%, that the signal modulation factor when a 3T signal is recorded is 30% to 70%, and the like.

However, of recording materials used in the above conventional writable optical data recording medium, Te, Te-Ge system, cyanine, etc., are arranged to have a low reflectance so that recording light can be efficiently absorbed for high recording sensitivity. It is therefore impossible to play back data on a medium formed from such a material with a CD or VD player. An optical data recording medium which is produced in a single-plate structure similarly to conventional CDs is required to be excellent in environmental resistance in particular. However, conventional materials for conventional write once optical data recording type media are all poor in environmental resistance, and even from this viewpoint, such materials are not suitable for use in a write once type optical data recording CD or VD.

The recording material made of an alloy containing Au, Ag, etc., is used either to form pits or concave portion on the basis of removal or deformation of the recording material under thermal evaporation (Japanese Laid-open Utility Publication No. 54-111106, etc.) or to utilize only a reversible change in the atomic arrangement of the recording layer (Japanese Laid-open Patent Publication No. 62-183042, etc.) With such a material, it is difficult to acquire a high reflectance and a high signal modulation factor at the same time.

A write once optical data recording type CD having an organic dye compound layer has the following problems. That is, an organic dye compound is generally deteriorated due to sun light, and the optical properties thereof change with time. In particular, when water is present, the above optical properties extraordinarily change, and the function of such a CD as an optical data recording medium is lost in a short period of time. In the above conventional write once optical data recording type CD, data is recorded on the basis of a change in the optical properties of the organic dye compound layer and a deformation in the transparent substrate. Therefore, when the organic dye material is deteriorated, data is consequently recorded on the basis of only a deformation in the transparent substrate, and the signal modulation factor of not less than 30% as a CD standard can be no longer maintained.

The present invention has been made in order to overcome the above defects of the prior art. It is an object of the present invention to provide an optical data recording medium suitable to record signals which can be played back with a CD or VD player, a method for writing and reading data on this optical data recording medium, and an apparatus suitable to record data on the optical data recording medium.

According to the present invention, there is provided an optical data recording medium having a single-layered or multi-layered thin film containing at least a recording layer and being supported on a signal surface of a substrate, the recording layer having an alloy portion composed mainly of at least one element selected from an element group of [Au, Ag, Al and Cu] at least in part of a film surface direction, and being formed on the above signal surface of the substrate directly or through a thermal deformation layer composed of a substance having lower heat resistance than the substrate.

When the signal surface of the substrate is formed from a plastic material having relatively low heat resistance, the above recording layer is formed directly on the signal surface of the substrate. When the signal surface of the substrate is formed from a ceramic material such as glass or a plastic material having relatively high heat resistance, the above recording layer is formed on a thermal deformation layer formed on the signal surface of the substrate. The above substrate or thermal deformation layer is preferably formed from a substance having a thermal decomposition temperature of not more than 800°C.

Fig. 1 is a cross-sectional view of the main part of the optical data recording medium prepared in Example 1.

Fig. 2 is a plan view of the optical data recording medium prepared in Example 1.

Fig. 3 is a cross-sectional view showing the form of a guide groove.

Fig. 4 is a graph showing the relationship among the depth of the guide groove, the width of the guide groove and the signal modulation degree.

Fig. 5 is a cross-sectional view of the main part of the optical data recording medium prepared in Example 2.

Fig. 6 is a cross-sectional view of the main part of the optical data recording medium prepared in Example 3.

Fig. 7 is a cross-sectional view of the main part of the optical data recording medium prepared in Example 4.

Fig. 8 is a cross-sectional view of the main part of the optical data recording medium prepared in Example 5.

Fig. 9 is a cross-sectional view of the main part of the optical data recording medium prepared in Example 6.

Fig. 10 is a schematic view of an optical data recording apparatus according to the present invention.

Fig. 11 is a timing chart showing a method for recording signals on an optical data recording medium.

Fig. 12 is a cross-sectional view of the main part of a medium, showing a first embodiment of the forms of a guide groove and a recording layer.

Fig. 13 is a cross-sectional view of the main part of a medium, showing a second embodiment of the forms of a guide groove and a recording layer recorded information data signal.

Fig. 14 is a cross-sectional view of the main part of a medium, showing a third embodiment of the forms of a guide groove and a recording layer.

Fig. 15 is a cross-sectional view of the main part of a medium, showing a fourth embodiment of the forms of a guide groove and a recording layer.

Fig. 16 is a cross-sectional view of the main part of a medium, showing a fifth embodiment of the forms of a guide groove and a recording layer.

Fig. 17 is a cross-sectional view of the main part of a medium, showing a sixth embodiment of the forms of a guide groove and a recording layer.

Fig. 18 is a cross-sectional view of a medium, showing another embodiment of a cavity-formed portion.

Fig. 19 is a schematic view showing a method for reading data in an optical data recording medium.

Fig. 20 is a schematic view showing an effect of a cavity.

Fig. 21 is a graph showing the relationship between a reflectance and a cavity in an optical data recording medium.

Fig. 22 is a plan view of another embodiment of an optical data recoding medium.

Fig. 23 shows the relationship among the Au content in a recording layer of an Au-Sn alloy system, the read output signal level in a record portion and the recording power.

Fig. 24 shows the relationship between the decomposition temperature of a substrate on which a recording layer of an Au-Sn alloy system is formed and the recording power.

Fig. 25 shows the relationship among the proportion of Ti in a recording layer of an Au-Sn alloy system, the read output signal level in a record portion and the noise level.

In the above Figures, numerals indicate the following. 1: substrate, 2: signal surface, 3: recording layer, 4: protection layer, 5a: guide groove (pregroove), 5b: prepit alignment, 11: thermal deformation layer, A: cavity.

Specific examples of the recording layer material are as follows:

(1) A homogeneously composed alloy which mainly contains at least one element selected from the [Au, Ag, Al and Cu] element group and at least one element selected from the [Ge, Si, Sn, Pb, Ga, In, Tl, Sb, Bi and Zn] element group.

(2) A material which mainly contains at least one element selected from the [Au, Ag, Al and Cu] element group and at least one element selected from the [Ge, Si, Sn, Pb, Ga, In, Tl, Sb, Bi and Zn] element group, and which has its composition changed in the film thickness direction.

(3) A laminate formed of at least two layers comprising a thin film composed mainly of at least one element selected from the [Au, Ag, Al and Cu) element group and a thin film composed mainly of at least one element selected from the [Ge, Si, Sn, Pb, Ga, In, Tl, Sb, Bi and Zn] element group.

(4) A material containing at least one element selected from the [Au, Ag, Al and Cu] element group and either at least one element selected from the [N, O, H, He, Ne, Ar, Kr and Xe] element group or at least one element selected from the [B, C and P] element group.

(5) A material which mainly contains at least one element selected from the [Au, Ag, Al and Cu] element group and at least one element selected from the [Ge, Si, Sn, Pb, Ga, In, Tl, Sb, Bi and Zn] element group, and which further contains either at least one element selected from the [N, O, H, He, Ne, Ar, Kr and Xe] element group or at least one element selected from the [B, C and P] element group.

(6) A material which corresponds to that in the above (4) or (5) and has a homogeneous composition.

(7) A material which corresponds to that in the above (4) or (5) and has its composition changed in the film thickness direction.

(8) A laminate formed of at least two layers comprising a thin film composed mainly of at least one element selected from the [Au, Ag, Al and Cu] element group and a thin film composed mainly of at least one element selected from the [Ge, Si, Sn, Pb, Ga, In, Tl, Sb, Bi and Zn] element group, at least one layer of the laminate containing either at least one element selected from the [N, O, H, He, Ne, Ar, Kr and Xe] element group or at least one element selected from the [B, C and P] element group.

(9) A material containing at least one element selected from the [Au, Ag, Al and Cu] element group and at least one element selected from the [Sc, Ti, V, Cr, Mn, Fe, Co, Ni, Y, Zr, Nb, Mo, Tc, Ru, Rh, Pd, Cd, Hf, Ta, W, Re, Os, Ir and Pt] element group.

(10) A material which mainly contains at least one element selected from the [Au, Ag, Al and Cu] element group and at least one element selected from the [Ge, Si, Sn, Pb, Ga, In, Tl, Sb, Bi and Zn] element group, and which further contains at least one element selected from the [Sc, Ti, V, Cr, Mn, Fe, Co, Ni, Y, Zr, Nb, Mo, Tc, Ru, Rh, Pd, Cd, Hf, Ta, W, Re, Os, Ir and Pt] element group.

(11) A material which corresponds to that in the above (9) or (10) and has a homogeneous composition in the film thickness direction.

(12) A material which corresponds to that in the above (9) or (10) and has its composition changed in the film thickness direction.

(13) A laminate formed of at least two layers comprising a thin film composed mainly of at least one element selected from the [Au, Ag, Al and Cu] element group and a thin film composed mainly of at least one element selected from the [Ge, Si, Sn, Pb, Ga, In, Tl, Sb, Bi and Zn] element group, at least one layer of the recording layers containing at least one element selected from the [Sc, Ti, V, Cr, Mn, Fe, Co, Ni, Y, Zr, Nb, Mo, Tc, Ru, Rh, Pd, Cd, Hf, Ta, W, Re, Os, Ir and Pt] element group.

(14) A material which corresponds to any one of (1) to (13) and which satisfies at least one, preferably all, of the three conditions that the melting point is not more than 1,000 °C, that the thermal conductivity is not more than 50 W/m·K and that the light absorptivity is not less than 15%.

If classified according to a method of recording data, there can be used a material which, when light energy in a pulse form is scanned along a record track preformated in a signal surface of a substrate, gives a deformation of the signal surface of the above substrate or the above thermal deformation layer being in contact with the above recording layer scanned with a high-level light energy and which is obtained from any one of the following materials:

(1) a material which shows a change in the atomic arrangement at least in part of the recording layer being in contact with such a deformation portion,

(2) a material which shows a fusion-induced mixing phenomenon or diffusion at least in part of the recording layer being in contact with such a deformation portion, when the recording layer is a laminate composed of at least two layers.

(3) a material which also shows a deformation at least in part of the recording layer being in contact with such a deformation portion, and

(4) a material which forms recording element such as a cavity, a void, a hole, etc. (hereinafter "cavity" includes a cavity, a void, a hole, etc.) at least in the interior of the above substrate being in contact with such a deformation portion or the above thermal deformation layer, between either the substrate or the thermal deformation layer and the recording layer or in the interior of the recording layer.

Further, there can be used a material which forms a cavity at least between the substrate and the recording layer in a portion scanned with high-level light energy or in the interior of the recording layer thereby to perform data recording without any deformation of the substrate.

In addition, in order to obtain a high reflectance under a multiple interference effect, a reflection layer having a higher reflectance to reading light than the recording layer may be formed on the surface of the recording layer which is formed on the substrate. As a material for this reflection layer having a high reflectance, Au, Al, etc., are preferred. Further, in order to produce a higher multiple interference effect and to increase the recording sensitivity by preventing thermal diffusion, an intermediate layer of an inorganic material and a reflection layer having a higher reflectance to reading light than the above recording layer may be also consecutively formed on the surface of the recording layer which is formed on the substrate. Furthermore, in order to increase the absorptivity of light energy for higher recording sensitivity and recording modulation factor, a layer of an organic dye compound may be provided in an interface between either the substrate or the thermal deformation layer and the recording layer.

The methods for recording and reading data are as follows. Recording light energy intensity-modulated in a pulse form is scanned to an optical recording medium in which a recording layer having an alloy portion mainly composed of at least one element selected from the [Au, Ag, Al and Cu] element group at least in part of the film surface, on which at least a preformat pattern is formed, is formed on the signal surface of a substrate directly or through a thermal deformation layer composed from a substance having lower heat resistance than the substrate, and the light energy is transduced to heat energy through the above recording layer, thereby deforming the signal surface of the above substrate scanned with high-level light energy or that surface of the above thermal deformation layer which is in contact with the above recording layer and at the same time causing a thermal change such as a change in the atomic arrangement, a fusion-induced mixing phenomenon, deformation, formation of a cavity, etc., at least in part of the recording layer being in contact with such a deformation portion to cause a difference in reflectance between a portion scanned with high-level light energy and a portion irradiated with a low-level light energy, whereby data recording is performed. And, the above thermal change in the above recording layer or the change in reflectance caused together with the thermal deformation of the above substrate or thermal deformation layer is optical read by scanning the medium with low-level and constant-intensity light energy, whereby data reading is performed.

Further, the apparatus for recording data has the following constitution. In a data recording apparatus having a medium actuation portion in which an optical recording medium is removably set and actuated, and an optical head which scans intensity-modulated light energy in a pulse form along a record track preformated on the above optical data recording medium; an optical data recording medium in which a recording layer having an alloy portion composed mainly of at least one element selected from the [Au, Ag, Al and Cu] element group at least in part of the film surface, on which at least a preformat pattern is formed, is formed on the signal surface of a substrate directly or through a thermal deformation layer composed from a substance having lower heat resistance than the substrate is set at the above medium actuation portion, the intensity of high-level light energy from the above optical head is so adjusted as to have a strength to deform the signal surface of the above substrate or that surface of the above thermal deformation layer which is in contact with the recording layer and also to cause a thermal change such as a change in the atomic arrangement, a fusion-induced mixing phenomenon, a deformation, formation of a cavity, etc., at least in that part of the recording layer which is in contact with such a deformation portion, and the intensity of the low-level light energy from the above optical head is adjusted so as not to cause any thermal change in the above substrate and recording layer.

In the recording layer having an alloy portion composed mainly of at least one element selected from the [Au, Ag, Al and Cu] element group at least in part of the film surface, on which at least a preformat pattern is formed, the element which is to constitute the recording layer is properly selected, and the proportion of the element and the film structure are properly adjusted, whereby a mirror portion, i.e. a flat portion where a preformat pattern of a guide groove, etc., is not formed can have a reflectance of not less than 70%. At the same time, a light absorptivity of as high as not less than 15% can be obtained. Therefore, when the medium is irradiated with light energy of laser light, etc., high heat is generated not only to deform the signal surface of the substrate or that surface of the thermal deformation layer which is in contact with the recording layer but also to cause a deformation at least in part of the recording layer being in contact with such a deformation portion.

Therefore, when the optical head guide groove preformated on the signal surface of the substrate is irradiated with light energy, the guide groove is deformed with its heat to form a flat surface and at the same time, at least part of the recording layer being in contact with such a deformed portion is also deformed together with the deformation of the guide groove. When the medium is irradiated with low-intensity reading light energy along the guide groove, those portions of the guide groove and the recording layer which have not been deformed show a decrease in reflectance (quantity of light returned to a detector) due to light diffraction, interference, etc., caused by the guide groove, whereas those portions of the guide groove and the recording layer which have been deformed to form a flat surface can give a reflectance of not less than 70% due to a decrease in diffraction light, a decrease in interference effect, etc. Moreover, the cross-sectional form, depth and width of the guide groove are properly formed, whereby a signal modulation factor of not less than 60% when a 11T signal is recorded and a signal modulation factor of 30% to 70% when a 3T signal is recorded can be achieved. As a result, data can be recorded and played pack with a CD or VD player.

Further, even when the mirror portion between the guide grooves preformed in the signal surface of the substrate is irradiated with light energy, the substrate or the thermal deformation layer can be deformed with its heat, and at least in part of the recording layer being in contact with such a deformed portion can be deformed. The medium is irradiated with low-intensity reading light energy along the mirror portion, whereby a reflectance of not less than 70% can be obtained as described above, and in those portions of the mirror portion and the recording layer which have been deformed under irradiation with light energy, the reflectance is decreased to not more than 70% due to light diffraction, interference, etc., caused in the deformation portion. Moreover, the thermal decomposition temperatures of the substrate and the thermal deformation layer and the light energy intensity are properly adjusted so as to form a deformation portion having a proper size, whereby a signal modulation factor of not less than 60% when a 11T signal is recorded and a signal modulation factor of 30% to 70% when a 3T signal is recorded can be achieved. Therefore, in this case, data can be also recorded and played back with a CD or VD player.

In addition, it is the degrees of the deformation of the guide groove and the deformation of the recording layer caused together therewith that have a greatest influence on the magnitude of the signal modulation factor. The portion irradiated with light energy is heated to a high temperature and rapidly cooled. There can be therefore a case where the recording layer itself undergoes a thermal change such as a change in the atomic arrangement, a fusion-induced mixing phenomenon, a deformation, formation of a cavity, etc., to have its reflectance changed, which change has an influence on the magnitude of the signal modulation factor. Therefore, in an optical data recording medium in which light energy is scanned along the guide groove, the composition of the recording layer, etc., are adjusted such that the portion irradiated with high-level light energy shows a higher reflectance than the non-irradiated portion, and in an optical data recording medium in which light energy is scanned along the mirror portion, the composition of the recording layer, etc., are adjusted such that the portion irradiated with high-level energy shows a lower reflectance than the non-irradiated portion, whereby it is also expected that a higher signal modulation factor can be obtained. The above change in the atomic arrangement can be considered to include changes in crystal grain size and crystal form in addition to a change between a crystalline state and an amorphous state. Further, when a recording layer is formed of a laminate containing at least two layers, the above change is also considered to include interlayer transfer or diffusion of atoms.

Example 1

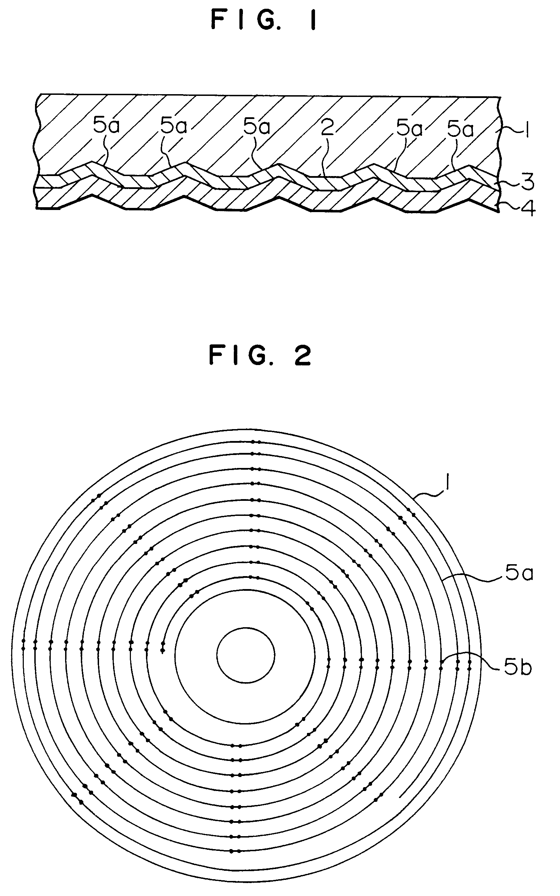

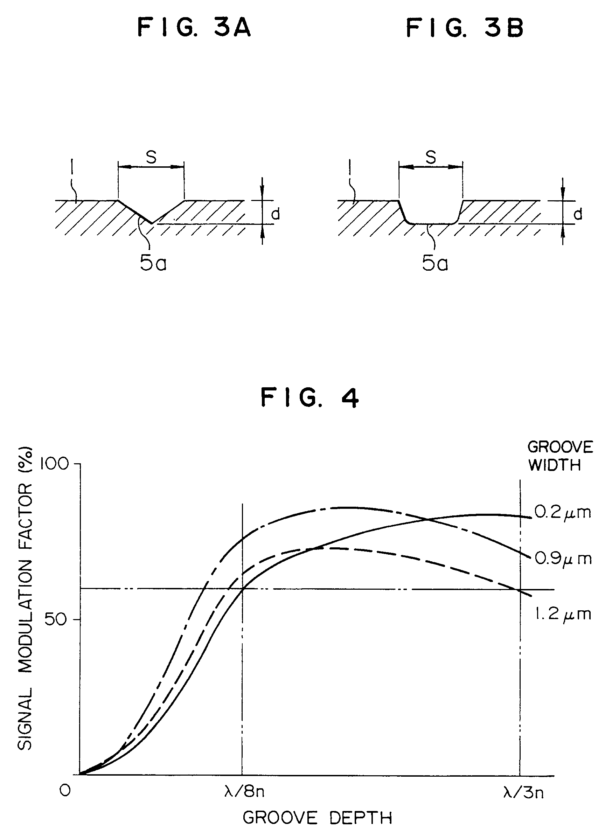

Example 1 of the optical data recording medium of the present invention is explained by reference to Figs. 1 to 4. Fig. 1 is a cross-sectional view of the main part of the optical data recording medium in Example 1. Fig. 2 is a plan view of the medium. Fig. 3 is a cross-sectional view of the medium showing the form of a guide groove. Fig. 4 is a graph showing the relationship among the guide groove depth, the guide groove width and the signal modulation factor.

As shown in Fig. 1, the optical data recording medium of this Example has its characteristic features in that a recording layer 3 made of an alloy is formed directly on a signal surface 2 of a substrate 1 and that a protection layer 4 is stacked on a surface of said recording layer (that surface of the recording layer 3 which is opposite to the substrate 1).

The substrate 1 is formed into a disk form having a central hole 1a in the middle and a desired diameter from a transparent plastic material such as polycarbonate, polymethyl methacrylate, polymethyl pentene, polyolefin, epoxy, etc., or a transparent ceramic material such as glass. On the signal surface 2 of the substrate 1, a guide groove 5a to guide a light beam spot and a prepit alignment 5b for a header signal are preformated in a fine uneven form. As shown in Fig. 2, the above guide groove 5a is formed spirally or concentrically with regard to the substrate 1, and the above prepit alignment 5b is formed over the guide groove 5a. The cross section of the above guide groove 5 may be formed in a V-letter shape as shown in Fig. 3(a) or in a U-letter shape as shown in Fig. 3(b). An explanation of the method for forming a preformat pattern of the guide groove 5a, the prepit alignment 5b, etc., is omitted since it is already known and is not directly related to the gist of the present invention.

The depth d and width s of the guide groove 5 have a close relationship to the magnitude of the signal modulation factor as shown in Fig. 4. In order to play back signals with a CD player, the signal modulation factor when a 11T signal is recorded is required to be not less than 60% and the signal modulation factor when a 3T signal is recorded is required to be in the range of 30% to 70% as described above. Therefore, according to Fig. 4, the guide groove 5 of the data recording medium to be used with a CD player is required to be formed such that the depth d satisfies $\lambda/8n$ - $\lambda/3n$ in which $\lambda$ is the wavelength of reading laser light and n is the reflectance of the substrate 1. Further, according to Fig. 4, the guide groove 5 is required to be formed such that the width is 0.2 $\mu$m to 1.2 $\mu$m. In addition, when the guide groove is formed so as to have a depth d and a width s in the range of the above values, a tracking modulation factor sufficient to track the laser beam spot along the guide groove 5 can be obtained, and no problems of deviation of the laser beam spot, etc., occur.

The recording layer 3 is formed from an alloy composed mainly of at least one element selected from the [Au, Ag, Al and Cu] element group. The recording layer material is specifically selected from the following materials.

(1) A homogeneously composed alloy which mainly contains at least one element selected from the [Au, Ag, Al and Cu] element group and at least one element selected from the [Ge, Si, Sn, Pb, Ga, In, Tl, Sb, Bi and Zn] element group.

(2) A material which mainly contains at least one element selected from the [Au, Ag, Al and Cu] element group and at least one element selected from the [Ge, Si, Sn, Pb, Ga, In, Tl, Sb, Bi and Zn] element group, and which has its composition changed in the film thickness direction.

(3) A homogeneously composed alloy which contains at least one element selected from the [Au, Ag, Al and Cu] element group and either at least one element selected from the [N, O, H, He, Ne, Ar, Kr and Xe) element group or at least one element selected from the [B, C and P] element group.

(4) A material which contains at least one element selected from the [Au, Ag, Al and Cu] element group and either at least one element selected from the [N, O, H, He, Ne, Ar, Kr and Xe] element group or at least one element selected from the [B, C and P] element group and which has its composition changed in the film thickness direction.

(5) A material which mainly contains at least one element selected from the [Au, Ag, Al and Cu) element group and at least one element selected from the [Ge, Si, Sn, Pb, Ga, In, Tl, Sb, Bi and Zn] element group and which further contains either at least one element selected from the [N, O, H, He, Ne, Ar, Kr and Xe] element group or at least one element selected from the [B, C and P] element group.

(6) A material which is an alloy being composed mainly of at least one element selected from the [Au, Ag, Al and Cu] element group and at least one element selected from the [Ge, Si, Sn, Pb, Ga, In, Tl, Sb, Bi and Zn] element group, and further containing either at least one element selected from the [N, O, H, He, Ne, Ar, Kr and Xe] element group or at least one element selected from the [B, C and P] element group, and which has its composition changed in the film thickness direction.

(7) A homogeneously composed material which contains at least one element selected from the [Au, Ag, Al and Cu] element group and at least one element selected from the [Sc, Ti, V, Cr, Mn, Fe, Co, Ni, Y, Zr, Nb, Mo, Tc, Ru, Rh, Pd, Cd, Hf, Ta, W, Re, Os, Ir and Pt] element group.

(8) A material which contains at least one element selected from the [Au, Ag, Al and Cu] element group and at least one element selected from the [Sc, Ti, V, Cr, Mn, Fe, Co, Ni, Y, Zr, Nb, Mo, Tc, Ru, Rh, Pd, Cd, Hf, Ta, W, Re, Os, Ir and Pt] element group and which has its composition changed in the film thickness direction.

(9) A homogeneously composed material which mainly contains at least one element selected from the [Au, Ag, Al and Cu] element group and at least one element selected from the [Ge, Si, Sn, Pb, Ga, In, Tl, Sb, Bi and Zn] element group, and which further contains at least one element selected from the [Sc, Ti, V, Cr, Mn, Fe, Co, Ni, Y, Zr, Nb, Mo, Tc, Ru, Rh, Pd, Cd, Hf, Ta, W, Re, Os, Ir and Pt] element group.

(10) A material which mainly contains at least one element selected from the [Au, Ag, Al and Cu] element group and at least one element selected from the [Ge, Si, Sn, Pb, Ga, In, Tl, Sb, Bi and Zn] element group, which further contains at least one element selected from the [Sc, Ti, V, Cr, Mn, Fe, Co, Ni, Y, Zr, Nb, Mo, Tc, Ru, Rh, Pd, Cd, Hf, Ta, W, Re, Os, Ir and Pt] element group, and which has its composition changed in the film thickness direction.

(11) A material which corresponds to any one of the materials (1) to (10) and which satisfies at least one, preferably all, of the three conditions that the melting point is not more than 1,000°C, that the thermal conductivity is not more than 50 W/m•K and that the light absorptivity is at least 15%.

According to a method of recording data, there can be used a material which, when light energy in a pulse form is scanned along the guide groove 5a preformated on a signal surface 2 of the substrate 1, gives a deformation to the signal surface 2 of the above substrate 1 scanned with a high-level light energy and which is obtained from any one of the following materials.

(1) A material which shows a change in the atomic arrangement at least in part of the recording layer 3 being in contact with such a deformation portion and permits data recording due to a difference in reflectance between the portion scanned with high-level light energy and the portion irradiated with low-level light energy,

(2) a material which shows a fusion-induced mixing phenomenon or diffusion at least in part of the recording layer 3 being in contact with such a deformation portion, and permits data recording due to a difference in reflectance between the portion scanned with high-level light energy and the portion irradiated with low-level light energy,

(3) a material which also shows a deformation at least in part of the recording layer 3 being in contact with such a deformation portion, and permits data recording due to a difference in reflectance between the portion scanned with high-level light energy and the portion irradiated with low-level light energy, and

(4) a material which forms recording elements such as a cavity, a void, a hole, etc. at least in the interior of the above substrate 1 between the substrate 1 and the recording layer 3 or in the interior of the recording layer 1 being in contact with such a deformation portion, and permits data recording for write one read many due to a difference in reflectance between the portion scanned with high-level light energy and the portion irradiated with low-level light energy.

Further, there can be used a material which, when the medium is scanned with light energy in a pulse form along the guide groove 5a preformated on the signal surface 2 of the substrate 1, forms recording element such as a cavity, a void, a hole, etc. at least between the substrate 1 and the recording layer 3 or in the interior of the recording layer 3 thereby to perform data recording without any deformation of the substrate and permits data recording due to a difference in reflectance between the portion scanned with high-level light energy and the portion irradiated with low-level light energy.

The above recording layer materials may contain at east one additional element out of, for example, Te, Se, S, Hg, As, Po, a halogen element, an alkali metal element, an alkaline earth metal element, an actinide element, a lanthanide element, etc. Two or more elements may be selected from each element group above. In this case, one element is considered to be a main component, and the other(s) is considered to be an additional element.

Any element selected from the [N, O, H, Ne, Ar, Kr and Xe] element group and any element selected from the [B, C and P] element group have effects that the crystal grain diameter is finely decreased and that the stability in an amorphous state is increased. Any element selected from the [Sc, Ti, V, Cr, Mn, Fe, Co, Ni, Y,, Zr, Nb, Mo, Tc, Ru, Rh, Pd, Cd, Hf, Ta, W, Re, Os, Ir and Pt] element group has effects that the recording sensitivity is increased by easing the absorption of semiconductor laser light and by reducing the thermal conductivity. Any element selected from the [Te, Se and S] element group has an effect of increasing the stability in an amorphous state and the oxidation resistance. A halogen atom and an alkali metal element have an effect of improving the crystallization rate and increasing the stability in an amorphous state. Further, a rare earth metal element, etc., may be used to increase the crystallization temperature.

The recording layer containing an element selected from the above [N, O, H, Ne, Ar, Kr and Xe) element group is preferred in that such a recording layer can be formed by an easy method such as a reactive sputtering method, etc. Of these, N, O, H, etc., are incorporated into the recording layer preferably by sputtering in an atmosphere of a mixture gas containing $N_2$, $O_2$ or $H_2$ (e.g. Ar-$N_2$ gas). The recording layer containing an element selected from the [B, C or P] element group or an element selected from the [Sc, Ti, V, Cr, Mn, Fe, Co, Ni, Y,

Zr, Nb, Mo, Tc, Ru, Rh, Pd, Cd, Hf, Ta, W, Re, Os, Ir and Pt] element group is preferred in that the composition is easily controlled in a wide compositional range. However, when a large amount of an element selected from the [B, C and P] element group is contained in the film, the reflectance is decreased. When at least one element selected from the [Te, Se and S] element group is added, the oxidation resistance of the resultant recording layer is remarkably improved. However, it is required to give care to handling of Te and Se in that these are highly toxic.

Of the above recording materials, more preferred is an alloy which contains at least one element selected from the [Au, Ag, Al and Cu] element group and satisfies all of the conditions that the melting point is not more than 900°C, that the thermal conductivity is not more than 35 W/m•k and that the light absorptivity is not less than 15%. Particularly preferred is an alloy which contains at least one element selected from the [Au, Ag, Al and Cu] element group and satisfies all of the conditions that the melting point is not more than 850°C, that the thermal conductivity is not more than 25 W/m•k and that the light absorptivity is not less tan 20%.

Of the [Ge, Si, Sn, Pb, Ga, In, Tl, Sb, Bi and Zn] element group, Ge, Si, Sn, Ga, In and Zn are preferred in that their toxicity is low, and Ge, Si and Sn are more preferred in that these can be easily formed into an alloy having a low melting point. On the other hand, of the [Au, Ag, Al and Cu] element group, Au is preferred in that it gives a high reflectance and excellent corrosion resistance. Ag and Cu are preferred in that these give a high reflectance and are inexpensive. Al is preferred in that it gives excellent corrosion resistance and is inexpensive.

Of the [N, O, H, He, Ne, Ar, Kr and Xe] element group, N, O and H are preferred in that these have a large effect of stabilizing an amorphous state and finely decreasing the crystal grain diameter. Of these three elements, N is more preferred in that a film can be easily formed therefrom. Of the [Sc, Ti, V, Cr, Mn, Fe, Co, Ni, Y, Zr, Nb, Mo, Tc, Ru, Rh, Pd, Cd, Hf, Ta, W, Re, Os, Ir and Pt] element group, preferred are Ti, V, Cr, Mn, Co, Ni, Nb, Mo, Ta and W.

Particularly preferred are a combination containing Sn and Au. Of these, a combination having an average composition in the film thickness direction represented by the following formula is the most preferred.

$$Au_xSn_yMA_aMB_bMC_cMD_dME_e$$

wherein MA is at least one member selected from the [N, O, H, He, Ne, Ar, Kr and Xe] element group, MB is at least one element selected from the [B, C and P] element group, MC is at least one element selected from the [Sc, Ti, V, Cr, Mn, Fe, Co, Ni, Y, Zr, Nb, Mo, Tc, Ru, Rh, Pd, Cd, Hf, Ta, W, Re, Os, Ir and Pt] element group, MD is at least one element selected from the [Te, Se and S] element group, and ME is an element other than those represented by Au, Sn, MA, MB, MC, MD and ME.

The element as the above ME is selected, for example, from As, Po, Hg, a halogen element, an alkali metal element, an alkaline earth metal element, an actinide element, a lanthanide element, etc. When a plurality of elements out of any one of the element groups for MA, MB, MC and MD are used, one is considered to belong to such a group, and other(s) of a plurality of the elements can be considered to be used as an element from the ME element group.

In the above formula, each of the suffixes x, y, a, b, c, d, and e is a content of the corresponding component, and can be set in the following range, in which the unit is atomic %.

$10 \leq x \leq 95$
$5 \leq y \leq 90$
$0 \leq a \leq 30$
$0 \leq b \leq 30$
$0 \leq c \leq 30$
$0 \leq d \leq 30$
$0 \leq e \leq 30$

A more preferable result can be obtained by setting these contents in the following ranges.

$20 \leq x \leq 90$
$10 \leq y \leq 80$
$0 \leq a \leq 20$
$0 \leq b \leq 20$
$0 \leq c \leq 20$
$0 \leq d \leq 20$
$0 \leq e \leq 20$

A particularly preferred result can be obtained by setting these contents in the following ranges.

$30 \leq x \leq 88$
$12 \leq y \leq 70$
$0 \leq a \leq 15$
$0 \leq b \leq 15$
$0 \leq c \leq 15$
$0 \leq d \leq 15$
$0 \leq e \leq 15$

In each of the above compositions as above, when n nearly equals 0, a film can be easily formed.

When an organic dye compound layer is provided between either the substrate or the thermal deformation layer and the recording layer, the reflectance is decreased to some extent. It is therefore preferred to adjust the Sn content to 20 atomic % or less, or to form a reflection layer of Au, Al, etc., on the surface of the recording layer which is formed on the substrate.

Each component in the recording layer 3 may have a uniform distribution or a concentration gradient in the film thickness direction. For example, a higher distribution of Se or S toward the surface of the recording layer is preferred in that the resultant medium has excellent oxidation resistance.

The protection layer 4 is formed from an inorganic material such as AlN, $Al_2O_3$, SiN, $SiO_2$, etc., or an organic material such as a photo-curable resin, a thermoplastic resin, etc. The organic material is selected, for example, from polyethylene, polystyrene, polyethylene tetrafluoride (Teflon), polyimide, an acrylic resin, a polyolefin, polyethylene terephthalate, polycarbonate, an epoxy resin, a hot-melt adhesive, a UV-curable resin, paraffin, etc. Of these materials, a UV-curable resin is preferred in that it has excellent slide resistance. A thermoplastic resin is preferred in that the guide groove deformation and the recording layer deformation to take place together therewith are easily attained. A thermoplastic resin and paraffin are preferred in that the deformation of the guide groove 5a and the deformation of the recording layer 3 to take place together are easily attained. Further, since paraffin permits the selection of its melting point based on the selection of its molecular weight, thermal designing is facilitated. Since, however, the protection effect is low when paraffin is used alone, it is preferred to stack a UV-curable resin film thereon. When an organic material having a high porosity is used, the recording sensitivity is improved as an effect of it. The protection layer 4 may be constituted of two different layers from the above inorganic and organic materials. For example, a thermoplastic resin layer is formed on the recording layer 3 from a hot-melt adhesive, etc., and then layer from an inorganic material such as AlN, $Al_2O_3$, SiN, $SiO_2$, etc., or a photo-curable layer from a UV-curable resin is formed thereon, whereby there can be obtained a medium having a high signal modulation factor, excellent recording sensitivity and excellent slide resistance.

The above recording layer 3 and the above protection layer 4 can be formed by any one of known film forming methods such as vacuum vaporization, in-gas vaporization, sputtering, ion beam vaporization, ion plating, electron beam vaporization, injection molding, casting, spin coating and plasma polymerization methods. Any layers of an inorganic material, such as a recording layer, etc., are preferably formed by a sputtering method. When an organic material is used for the protection layer 4, a spin coating or roll coating method can be applied depending upon the material.

Example 2

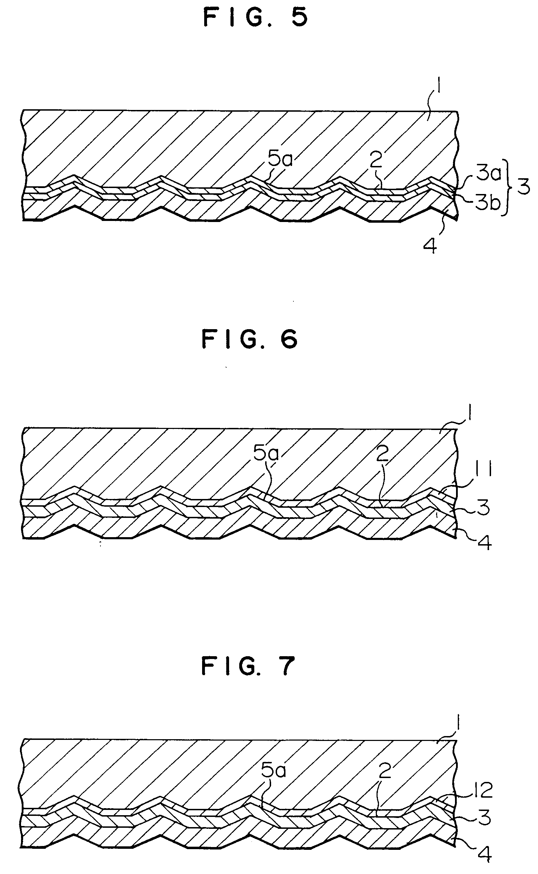

Example 2 of the optical data recording medium of the present invention is explained by reference to Fig. 5, which is a cross-sectional view of the main part of the optical data recording medium of this Example.

The optical data recording medium of this Example has its characteristic feature in that the recording layer 3 in Example 1 is formed of a laminate composed of a plurality of thin films having a different composition. In Fig. 5, a substrate 1 is provided, on its signal surface 2, with a recording layer 3 formed of a laminate composed of a first thin film 3a and a second thin film 3b. However, the film structure of the recording layer 3 shall not be limited to two layers, and the recording layer 3 may be formed of a laminate composed of more than two thin films.

Specific examples of the recording layer 3 are as follows.

(1) A layer formed of a laminate composed of at least two thin films which are a thin film containing at least one element selected from the [Au, Ag, Al and Cu] element group and a thin film containing at least one element selected from the [Ge, Si, Sn, Pb, Ga, In, Tl, Sb, Bi and Zn] element group.

(2) A layer formed of a laminate composed of at least two thin films which are a thin film containing at least one element selected from the [Au, Ag, Al and Cu] element group and a thin film containing at least one element selected from the [Ge, Si, Sn, Pb, Ga, In, Tl, Sb, Bi and Zn] element group, at least one layer of the laminate containing at least one element selected from the [N, O, H, He, Ne, Ar, Kr and Xe] element group or at least one element selected from the [B, C and P] element group.

(3) A layer formed of a laminate composed of at least two thin films which are a thin film containing at least one element selected from the [Au, Ag, Al and Cu] element group and a thin film containing at least one element selected from the [Ge, Si, Sn, Pb, Ga, In, Tl, Sb, Bi and Zn] element group, at least one layer of the laminate containing at least one element selected from the [Sc, Ti, V, Cr, Mn, Fe, Co, Ni, Y, Zr, Nb, Mo, Tc, Ru, Rh, Pd, Cd, Hf, Ta, W, Re, Os, Ir and Pt] element group.

(4) A layer which corresponds to any one of the above (1) to (3) and which satisfies at least one, preferably all, of the three conditions that the melting point is not more than 1,000°C, that the thermal conductivity is not more than 50 W/m·K and that the light absorptivity is at least 15%.

According to a method of recording data, there can be used a medium which, when light energy in a pulse form is scanned along the recording track preformated on a signal surface of the substrate, shows a deformation on the signal surface of the above substrate scanned with a high-level light energy or on that surface of the above thermal deformation layer which is in contact with the above recording layer and which is any one of the following media.

(1) A medium which shows a change in the atomic arrangement at least in part of the recording layer being in contact with such a deformation portion,

(2) a medium which shows a fusion-induced mixing phenomenon or diffusion at least in part of the recording layer being in contact with such a deformation portion,

(3) a medium which also shows a deformation at least in part of the recording layer being in contact with such a deformation portion, and

(4) a medium which forms a cavity at least in the interior of the above substrate being in contact with such a deformation portion, between the substrate and the recording layer or in the interior of the recording layer.

Concerning the remaining portions other than the recording layer 3, the description in the above Example 1 can apply to this Example, and such description is therefore omitted.

Example 3

Example 3 of the optical data recording medium of the present invention is explained by reference to Fig. 6, which is a cross-sectional view of the main part of the optical recording medium of this Example. In Fig. 6, those portions corresponding to those in Fig. 1 are indicated by the same numerals.

The optical data recording medium of this Example has its characteristic feature in that a thermal deformation layer 11 formed from a substance having lower heat resistance than a substrate 1 is provided in an interface between the substrate 1 and a recording layer 3 as shown in Fig. 6. As a substance from which to form the thermal deformation layer, particularly preferred is a thermoplastic resin. The optical data recording medium of this Example has a special effect when a highly heat resistant substrate having a direct cut for forming a preformat pattern of a guide groove 2a, etc., such as a glass substrate, a thermosetting resin substrate, or the like is used as the substrate 1. Further, there can be used a low heat-resistant thermoplastic resin substrate or a substrate prepared by forming a replica layer of a photo-curable resin on one surface of a glass plate or a thermosetting resin plate.

In addition, Fig. 6 shows the recording layer 3 formed of a single layer. However, the recording layer 3 may be formed of a laminate composed of a plurality of thin films similarly to the optical data recording medium in Example 2. Concerning the remaining portions, the description in the above Examples 1 and 2 can apply to this Example, and such description is therefore omitted.

Example 4

Example 4 of the optical data recording medium of the present invention is explained by reference to Fig. 7, which is a cross-sectional view of the main part of the optical data recording medium of this Example. In Fig. 7, those portions corresponding to those in Fig. 1 are indicated by the same numerals.

The optical data recording medium of this Example has its characteristic feature in that an organic dye compound layer 12 is provided in an interface between a substrate 1 and a recording layer 3. The organic dye compound for forming the organic dye compound layer 12 is selected, for example, from sparingly water-soluble organic dye materials such as polymethine dye, anthraquinone dye, cyanine dye, phthalocyanine dye, xanthene dye, triphenylmethane dye, pyrylium dye, azulene dye, metal-containing azo dye, etc. The organic dye compound layer 12 can be formed by spin-coating a solution of one or a mixture of at least two of the above organic dye materials in a solvent on a signal surface of the above transparent substrate 1.

Fig. 7 shows the organic dye compound layer 12 which is directly formed on the substrate 1. However, the organic dye compound layer 12 may be so formed on a thermal deformation layer 11 which has been formed on the signal surface 2 of the substrate as in the optical data recording medium in Example 3. Further, Fig. 7 shows the recording layer 3 which is formed of a single layer. However, the recording layer 3 may be so formed of a laminate composed of a plurality of thin films as in the optical data recording medium in Example 2. Concerning the remaining portions, the description in the above Examples 1, 2 and 3 can apply to this Example, and such description is therefore omitted.

Example 5

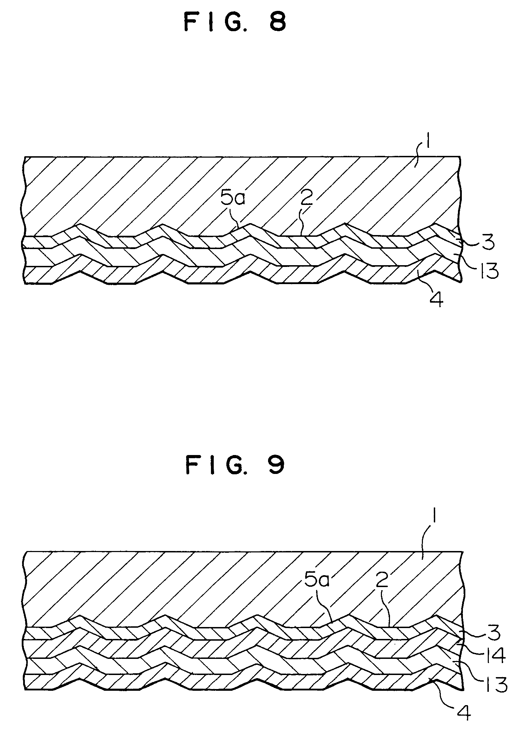

Example 5 of the optical data recording medium of the present invention is explained by reference to Fig. 8, which is a cross-sectional view of the main part of the optical data recording medium of this Example. In Fig. 8, those portions corresponding to those in Fig. 1 are indicated by the same numerals.

As shown in Fig. 8, the optical data recording medium of this Example has a reflection layer formed in the interface between a recording layer 3 and a protection layer 4. As a substance for forming the reflection layer 13, preferred are metal materials such as Au, Ag, Al, etc.

Fig. 8 shows the recording layer 3 which is formed of a single layer. However, the recording layer 3 may be so formed of laminate composed of a plurality of thin films as in the optical data recording medium in Example 2. Further, Fig. 8 shows the recording layer 3 which is directly formed on a substrate 1. However, the recording layer 3 may be so formed on a thermal deformation layer 11 which has been formed on a signal surface 11 of the substrate 1 as in the optical data recording medium in Example 3, or it may be so formed on the thermal deformation layer 11 or an organic dyestuff layer 12 after the thermal deformation layer 11 and/or the organic dyestuff layer 12 have been formed on the signal surface 2 of the substrate 1 as in the optical data recording medium in Example 4. Concerning the remaining portions, the description in the above Examples 1 to 4 can apply to this Example, and such description is therefore omitted.

Example 6

Example 6 of the optical data recording medium of the present invention is explained by reference to Fig. 9, which is a cross-sectional view of the main part of the optical data recording medium of this Example. In Fig. 9, those portions corresponding to those in Fig. 1 are indicated by the same numerals.

As shown in Fig. 9, the optical data recording medium of this Example has its characteristic feature in that an intermediate layer 14 and a reflection layer 13 are consecutively formed on that surface of a recording layer 3 which is opposite to a substrate 1.

The intermediate layer 14 contains oxide of at least one element selected from the group consisting of Ce, La, Si, In, Al, Ge, Pb, Sn, Bi, Te, Ta, Sc, Y, Ti, Zr, V, Nb, Cr and W; sulfide or selenide of at least one element selected from the group consisting of Cd, Zn, Ga, In, Sb, Ge, Sn, Pb and Bi; fluoride of Mg, Ce, Ca, etc.; nitride of Si, Al, Ta, B, etc.; carbide of B, Si, etc.; boride of Ti, etc.; boron; or carbon. And, the main component thereof has a composition near to one of $CeO_2$, $La_2O_3$, SiO, $SiO_2$, $In_2O_3$, $Al_2O_3$, GeO, $GeO_2$, PbO, SnO, $SnO_2$, $Bi_2O_3$, $TeO_2$, $Ta_2O_5$, $Sc_2O_3$, $Y_2O_3$, $TiO_2$, $ZrO_2$, $V_2O_5$, $Nb_2O_5$, $Cr_2O_3$, $WO_2$, $WO_3$, CdS, ZnS, CdSe, ZnSe, $In_2S_3$, $In_2Se_3$, $Sb_2S_3$, $Sb_2Se_3$, $Ga_2S_3$, $Ga_2Se_3$, GeS, GeSe, $GeSe_2$, SnS, $SnS_2$, SnSe, $SnSe_2$, PbS, PbSe, $Bi_2Se_2$, $Bi_2S_3$, $MgF_2$, $CeF_3$, $CaF_2$, TaN, $Si_3N_4$, AlN, BN, Si, $TiB_2$, $B_4C$, SiC, B and C; and a mixture of these.

Of the above sulfides, sulfides having a composition near to ZnS are preferred in that a refractive index of a proper degree is obtained and that the resultant film is stable. Of the above nitrides, nitrides having a composition near to TaN, $Si_3N_4$, AlN (aluminum nitride) or $AlSiN_2$ are preferred in that the surface reflectance is not too high and that the resultant film is stable and rigid. Of the above oxides, oxides having a composition near to $Y_2O_3$, $Sc_2O_3$, $CeO_2$, $TiO_2$, $ZrO_2$, SiO, $Ta_2O_5$, $In_2O_3$, $Al_2O_3$, $SnO_2$ or $SiO_2$ are preferred. Amorphous compounds of Si containing H are also preferred.

The material for the reflection layer 13 is so selected from metal materials such as Au, Ag, Al, etc., as in the above Example 5.

Fig. 9 shows the recording layer 3 which is formed of a single layer. However, the recording layer 3 may be so formed of a laminate composed of a plurality of thin films as in the optical data recording medium in Example 2. Further, Fig. 9 shows the recording layer 3 which is directly formed on the substrate 1. However, the recording layer 3 may be so formed on a thermal deformation layer 11 which has been formed on a signal surface 11 of the substrate 1 as in the optical data recording medium in Example 3, or it may be so formed on the thermal deformation layer 11 or an organic dyestuff layer 12 after the thermal deformation layer 11 and/or the organic dyestuff layer 12 have been formed on the signal surface 2 of the substrate 1 as in the optical data recording medium in Example 4. Concerning the remaining portions, the description in the above Examples 1 to 4 can apply to this Example, and such description is therefore omitted.

The data recording apparatus, the principle of recording data on the above data recording medium and the principle of playing back data with a CD or VD player are explained hereinafter.

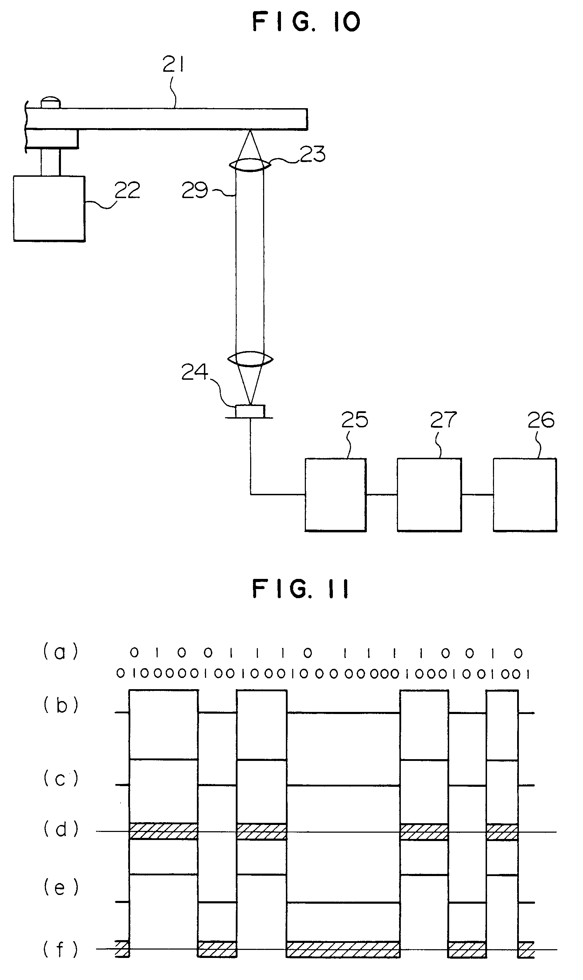

Fig. 10 is a schematic view of the optical data recording apparatus of the present invention, which has a spindle motor 22 which actuates any one of the optical data recording media of the above Examples when it is set removably, an objective lens 23 arranged so as to face a substrate 1 of an optical data recording medium 21, a laser light source 24, a laser actuation circuit 25, a signal source 26 and a recording signal generation circuit 27 which processes a signal inputted from the signal source 26 and generates a signal to be recorded in the optical data recording medium 21.

The medium actuation portion 22, in objective lens 23 and the laser light source 24 can be selected from devices to be mounted on a known optical data recording medium actuation apparatus of write once read many type.

The signal source 26 can be selected from a CD player, a record player, an audio tape player, a radio receiving set, a VD player, a video cassette recorder, a television set, etc. The signal source 26 may be mounted on the optical data recording apparatus of the present invention, or connected thereto as a peripheral device.

The recording signal generation circuit 27 transduces an analog signal inputted from the signal source 26 to a digital signal and also modulates the digital signal [Fig. 11 (a)] by a modulation method employed for CD and VD (e.g. EFM modulation for CD) to output a pulse-formed recording signal [Fig. 11(b)] having an intensity corresponding to a signal intensity read out from a CD player, a VD player, etc.

The laser actuation circuit 25 actuates the laser light source 24 and modulates the intensity of laser beam 29 such that the optical data recording medium 21 is irradiated with high-level laser beam corresponding to a high-level signal of the recording signal and with low-level laser beam corresponding to a low-level signal of the recording signal as shown in Fig. 11(c).

In this case, the intensity of the above low-level laser beam is adjusted to such a value that the reflectance of that portion of the optical data recording medium 21 which is scanned with laser beam at said level does not change. Meanwhile, the intensity of the above high-level laser beam is adjusted as follows according to the kind of the recording layer 3 of the optical data recording medium 21. That is:

(1) In the optical data recording medium to write data once by deforming the signal surface 2 of the substrate 1 or that surface of the thermal deformation layer 6 which is in contact with the recording layer 3, and also causing a change in the atomic arrangement at least in part of the recording layer 3 being in contact with such a deformation portion, the above intensity is adjusted to cause such a thermal change in either the substrate 1 or the thermal deformation layer 6 and the recording layer 3.

(2) In the optical data recording medium to write data once by deforming the signal surface 2 of the substrate 1 or that surface of the thermal deformation layer 6 which is in contact with the recording layer 3, and also causing a fusion-induced mixing phenomenon or diffusion at least in part of the recording layer 3 being in contact with such a deformation portion, the above intensity is adjusted to cause such a thermal change in either the substrate 1 or the thermal deformation layer 6 and the recording layer 3.

(3) In the optical data recording medium to write data once by deforming the signal surface 2 of the substrate 1 or that surface of the thermal deformation layer 6 which is in contact with the recording layer 3, and also causing a deformation at least in part of the recording layer 3 being in contact with said deformation portion, the above intensity is adjusted to cause such a thermal change in either the substrate 1 or the thermal deformation layer 6 and the recording layer 3.

(4) In the optical data recording medium to write data once by deforming the signal surface 2 of the substrate 1 or that surface of the thermal deformation layer 6 which is in contact with the recording layer 3, and also forming a cavity at least in the interior of the above substrate or thermal deformation layer being in contact with such a deformation portion, between either the substrate or the thermal deformation layer and the recording layer or in the interior of the recording layer, the above intensity is adjusted to cause such a thermal change in either the substrate 1 or the thermal deformation layer 6 and the recording layer 3.

(5) In the optical data recording medium to write data once by forming a cavity at least between the substrate and the recording layer or in the interior of the recording layer without causing a deformation of the substrate 1, the above intensity is adjusted to cause such a thermal change in the recording layer 3.

The principle of recording data on the optical data recording medium with the above apparatus and the principle of playing back data with a CD player, etc., are explained below by reference to a case in which data is written once on the guide groove 5a preformated on the substrate 1.

<First example of the principles of recording and reading data>

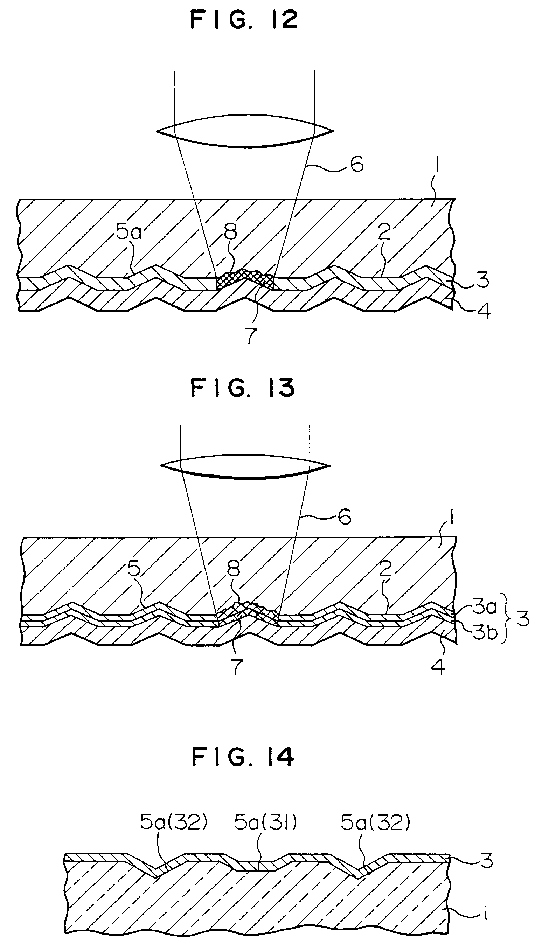

When laser beam 6 of which the intensity has been modulated as above is scanned along the above guide groove 5a, the light energy of the laser beam in a portion irradiated with high-level laser beam is transduced to heat energy, and the above guide groove 5a is thermally deformed to a flat form due to the heat as shown in Fig. 12. And, at the same, that part (hatching) of the above recording layer 3 which is in contact with such a deformation portion 8 undergoes a change 7 in the atomic arrangement, e.g. a change in a crystal grain diameter or crystal system, a change in an amorphous state and a crystalline state, diffusion, etc., and the reflectance of that part increases when that part is irradiated with reading laser beam. On the other hand, in a portion irradiated with low-level laser beam, no high heat is generated. As a result, the form of the guide groove 5a and the state of the recording layer 3 are retained as they have been, and the reflectance does not increase.

Fig. 11(d) shows an arrangement of a high reflectance portion 31 and a low reflectance portion 32 recorded in the optical data recording medium 21. In this case, the high reflectance portion 31 corresponds to a recording pitch. As described above, the medium is irradiated with high-level laser beam correspondingly to a high-level signal of recording signals corresponding to the intensity of signals read out from the signal source 26, and with a low-level laser beam corresponding to a low-level signal of recording signals. Therefore, data 1 is allotted to a start point and an end point of the low-level signal of the recording signals, i.e. a front end and back end of the low reflectance portion 32, and data 0 is allotted to the other portion, whereby desired data is recorded as a change in reflectance on the optical data recording medium 21.

When the optical data recording medium 21 on which data has been written once as described above is played back with a CD or VD player, the signal portion is read out as a low-level reflection signal as shown in Fig. 11(e), and data is played back. In this case, when the signal source is a CD player and CD-ROM is used as a medium for the signal source, the CD-ROM shows a pit alignment as shown in Fig. 11(f). Numeral 33 indicates a record pit. Thus, in this Example, the pit alignment is formed in a reversed shape to the medium of the signal source. In addition, Fig. 12 shows the medium having no thermal deformation layer. However, when the medium has an thermal deformation layer, the thermal deformation layer is deformed instead of the substrate 1 thereby to record data according to the same principle as above.

<Second example of the principle of recording and reading data>

In the optical data recording medium of which the recording layer 3 is formed of a plurality of layers, as shown in Fig. 13, that portion of the guide groove 5a which is irradiated with high-level laser beam is thermally deformed to a flat form. And, a fusion-induced mixing phenomenon takes place in that part (hatching) of the above recording layer 3 which is in contact with such a deformation portion 8, and the reflectance of said part, when the part is irradiated with reading laser beam, increases. On the other hand, in a portion irradiated with low-level laser beam, no high heat is generated. Therefore, the form of the guide groove 5a and the state of the recording layer 3 are retained as they have been, and the reflectance of this portion does not increase. Consequently, a high reflectance portion and a low reflectance portion, which correspond to recording signals, are formed on the optical data recording medium 21, whereby data is recorded. Signals, i.e. an alignment of high reflectance portions and low reflectance portions, and the principle of playing back the signals with a CD or VD player are the same as those in Example 1, and the expiation thereof is therefore omitted. In addition, Fig. 13 shows the optical data recording medium having no thermal deformation layer. However, when the medium has an thermal deformation layer, the thermal deformation layer is deformed instead of the substrate 1 thereby to record data according to the same principle as above.

<Third example of the principle of recording and reading data>

The third example shows an embodiment in which data is recorded without causing a change in the atomic arrangement or a fusion-induced mixing phenomenon in the recording layer 3. It depends on the composition, film structure, etc., of the recording layer 3 whether or not a change in the atomic arrangement or a fusion-induced mixing phenomenon is caused in the recording layer 3. In this case, as shown in Fig. 14, that part of the guide groove 5a which is irradiated with high-level laser beam is thermally deformed to a flat form, and at the same time, part of the above recording layer 3 which is in contact with such a deformation portion is deformed correspondingly to the deformation of the guide groove 5a. As a result, the reflectance of such a part, when the part is irradiated with reading layer light, increases. On the other hand, in a portion irradiated with low-level laser beam, no high heat is generated, and as result, the form of the guide groove 5a and the state of the recording layer 3 are retained as they have been, and the reflectance of this portion does not increase. Thus, a high reflectance portion and a low reflectance portion, which correspond to recording signals, are formed on the optical data recording medium 21 to record data. Signals, i.e. an alignment of high reflectance portions and low reflectance portions, and the principle of playing back the signals with a CD or VD player are the same as those in Example 1, and the expiation thereof is therefore omitted.

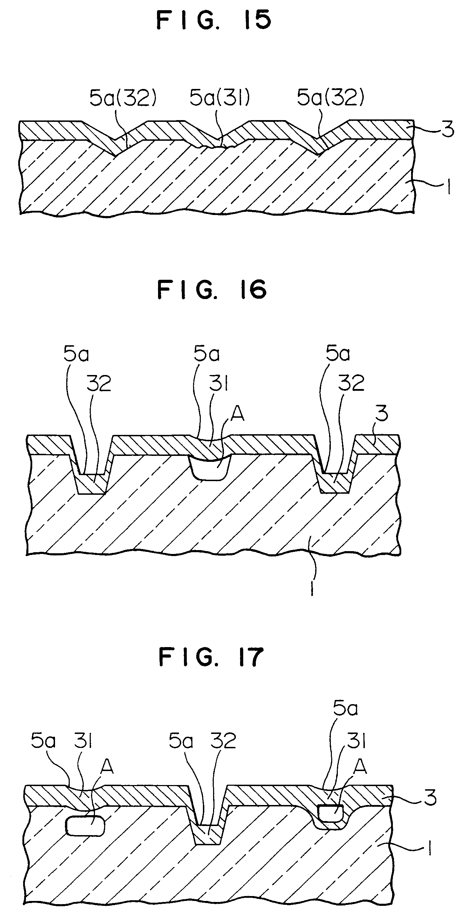

In addition, the guide groove 5a after deformed does not necessarily have a form as shown in Fig. 14, and may have a form so as to reduce diffraction light or reduce an interference effect. For example, the bottom of the guide groove 5a has a wave form as shown in Fig. 15. Further, that side of the recording layer 3 which is not in contact with the substrate 1 may have a deformed form or an underformed form. Further, Fig. 14 shows the optical data recording medium having no thermal deformation layer. However, when the medium has an thermal deformation layer, the thermal deformation layer is deformed instead of the substrate 1 thereby to record data according to the same principle as above.

<Fourth example of the principle of recording and reading data>

The fourth example shows an embodiment in which a cavity is formed at least in the interior of the substrate or the thermal deformation layer, between either the substrate or the thermal deformation layer or in the interior of the recording layer to record data. It depends on the composition and film structure of the recording layer 3 and the thermal decomposition temperature of the substrate 1 whether or not a cavity is formed in any of the above portions.

When laser beam of which the intensity is so modulated as in Fig. 11 (a), (b) and (c) is scanned on the guide groove 5a, the light energy of the laser beam is transduced into heat energy due to the above recording layer 3 in a portion irradiated with high level laser beam, and the substrate 1 is thermally decomposed due to the heat. Due to gas generated during the above process, a cavity A is formed as shown in Fig. 16, and the guide groove 5a is deformed. At the same time, part of the recording layer 3 which is in contact therewith is also deformed, and the reflectance of such a deformation portion, when the deformation portion is irradiated with reading laser light, increases. On the other hand, in a portion irradiated with low-level laser beam, no high heat is generated. Therefore, the form of the guide groove 5a and the state of the recording layer 3 are retained as they have been, and the reflectance does not increase. As a result, a high reflectance portion and a low reflectance portion, which correspond to recording signals, are formed to record data.

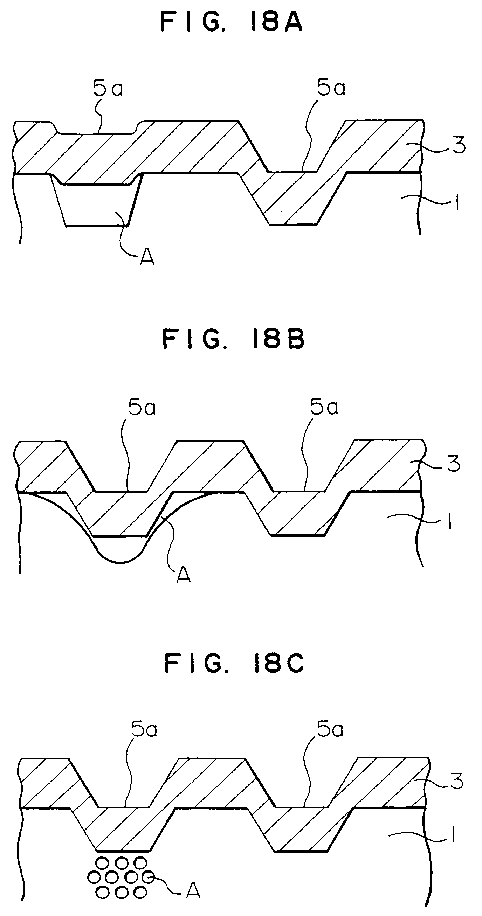

In addition, the guide groove 5 after deformed does not necessarily have a form as shown in Fig. 16, and it is sufficient to form a cavity A with which to decrease diffraction light or increase the reflectance under an interference effect. For example, the cavity A may be formed between the substrate 1 and the recording layer 3 or in the interior of the recording layer 3 as shown in Fig. 17. A plurality of cavities A naturally may be formed in at least two places: an interior of the substrate 1, a place between the substrate 1 and the recording layer 3 and an interior of the recording layer 3. Further, when the side of the recording layer 3 which is not in contact with the recording layer 3 is deformed, and when the recording layer has a small thickness, a high reflectance is obtained. When the recording layer 3 has a relatively large thickness, said side may have a deformed form or an underformed form.

As shown in Fig. 18, (a) and (b), any one of the surface of the substrate 1, that surface of the recording layer 3 which is on the substrate 1 side and that surface of the recording layer 3 which is opposite to the substrate may not be deformed. Further, the cavity A may not necessarily consist of one cavity, and may consists of at least two cavities as shown in Fig. 18(c).

The cavity A is formed when the temperatures of either the substrate or the thermal deformation layer and the recording layer increase, and a substance contained therein or its decomposition product is converted to a gas. When the substrate 1 is formed of a plastic, such a substance may be a surface lubricant or a heat stabilizer in some cases. Examples of the gas are hydrocarbon, hydrogen, oxygen, nitrogen, $H_2O$, Ar, CO, $CO_2$, etc. When the cavity is formed in the interior of the substrate or the thermal deformation layer or between either the substrate or the thermal deformation layer and the recording layer, and when these have a low thermal decomposition temperature, the gas is easily generated even if the light energy is small, and the cavity is therefore easily formed. As a result, excellent recording sensitivity is obtained. When the substrate or the thermal deformation layer contains a large amount of a low molecular weight component, the same effect as above can be also obtained. However, when the content of the low molecular weight component is large, the recording layer is liable to be easily corroded. When the cavity is formed between either the substrate or the thermal deformation layer and the recording layer or within the recording layer, and when the recording layer contains an element such as nitrogen, oxygen, argon, etc., these are converted to a gaseous form, and the cavity is easily formed. However, when the content of these elements is large, these move out of the recording layer, and these are undesirably liable to cause a change in the recording sensitivity with time.

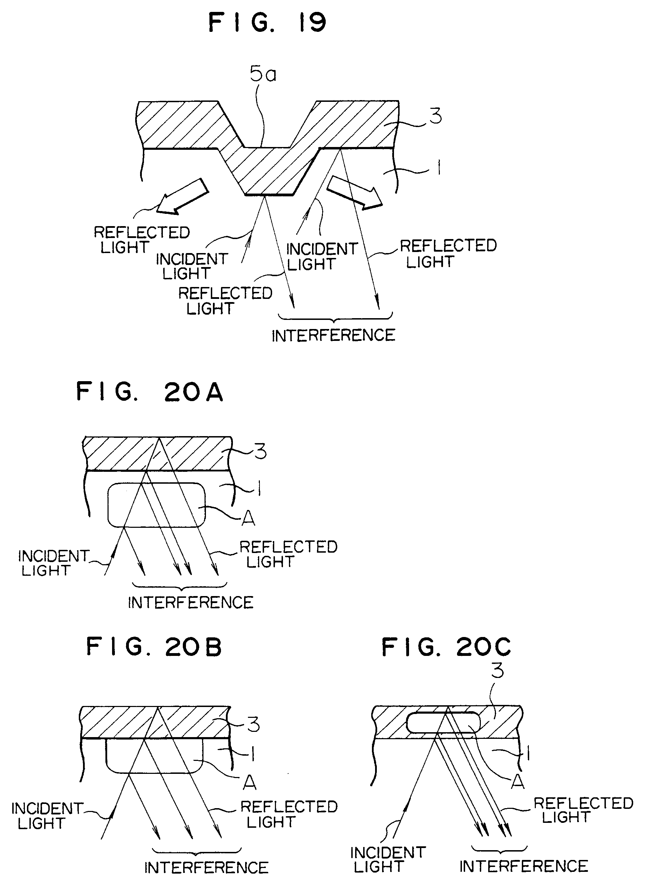

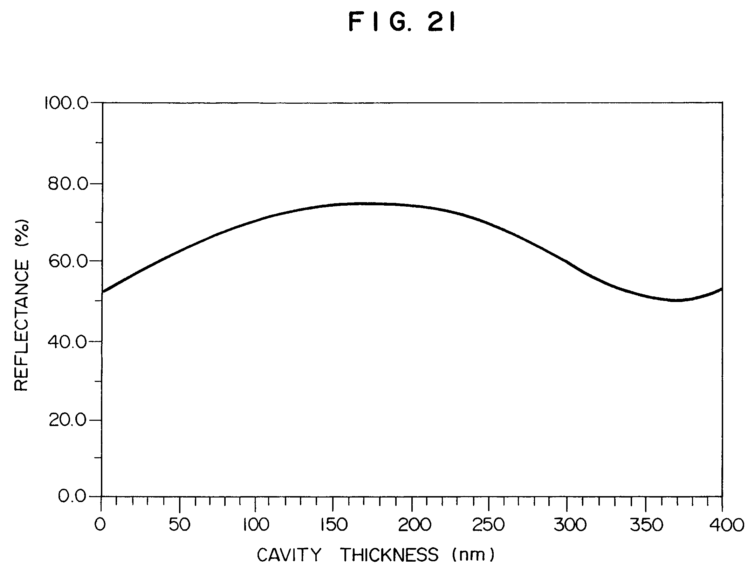

In general, when the guide groove of the optical data recording medium is irradiated with light energy of laser light, etc., the reflectance (quantity of light returned to a detector) decreases due to light diffraction and interference (Fig. 19). However, when the guide groove is irradiated with light energy having a predetermined magnitude, the cavity A is formed at least in the interior of the substrate or thermal deformation layer, between either the substrate or the thermal deformation layer and the recording layer or in the interior of the recording layer. As a result, there is an effect that a multiple interference effect is produced whereby the reflectance is improved [Fig. 20, (a), (b) and (c)]. Therefore, even with the medium of which the mirror portion has a reflectance of not more than 70%, a high reflectance can be obtained. As an example, Fig. 21 shows the dependency of the reflectance upon the cavity thickness when the cavity A is formed between the substrate 1 and the recording layer 3 in the medium having a reflectance of 55%. As shown in Fig. 21, when the cavity A has a thickness of about 100 nm to 250 nm, a reflectance of not less than 70% can be obtained. Thus, the reflectance of the deformed portion having the cavity A can be increased to 70% or more. Moreover, the cross-sectional form, depth and width of the guide groove are properly selected, whereby a signal modulation factor of not less than 60% at a 11T recording time and a signal modulation factor of 30% to 70% at a 3T recording time can be achieved.

Other embodiments of the present invention are listed below.

(1) In addition to the above Examples in which data is recorded on te guide groove 5a, data can be also recorded by scanning intensity-modulated light energy along a mirror portion between adjacent guide grooves to cause a thermal change in the mirror portion.

(2) In addition to the above Examples in which the light energy intensity is adjusted so as not to change the reflectance of a portion scanned with low-level light energy, the light energy intensity can be adjusted to such a value that the reflectance of a portion scanned with low-level light energy changes to some extent when a necessary signal modulation factor can be obtained.

(3) In addition to the above Examples in which data is recorded by thermally deforming both the guide groove 5a and the recording layer, data can be recorded on the basis of a thermal deformation of the recording layer alone when a necessary signal modulation factor can be obtained.

(4) In addition to the above Examples in which laser light source is used as an energy source for recording data on the optical data recording medium 21, other radiation energy sources such as electron beam source, etc., can be used.

(5) In the above Examples, in order to record data playable back with a CD or VD player, such data is recorded on the optical data recording medium 21 by a so-called pit edge recording method in which data 1 is allotted to the front end and back end of the low reflection portion 32 and data 0 is allotted to other portion. In addition to the above Examples, in order to record data which can be played back with a player adapted for playing back data which is recorded according to other recording method such as a pit position recording method, etc., such data can be recorded on the optical data recording medium 21 according to a desired recording method by suitably modifying the recording signal generation circuit 27.

(6) In addition to the above Examples in which the explanation is made by reference to an apparatus suitable for a recording medium having a disk form is used, the apparatus of the present invention can be used an apparatus suitable for a recording medium having a card form by modifying the medium actuation portion 22, etc.

(7) In addition to the above Examples in which the explanation is made by reference to an apparatus specialized for recording, the apparatus of the present invention can be equipped into a CD player, a VD player, etc., to form a recording and playing apparatus.

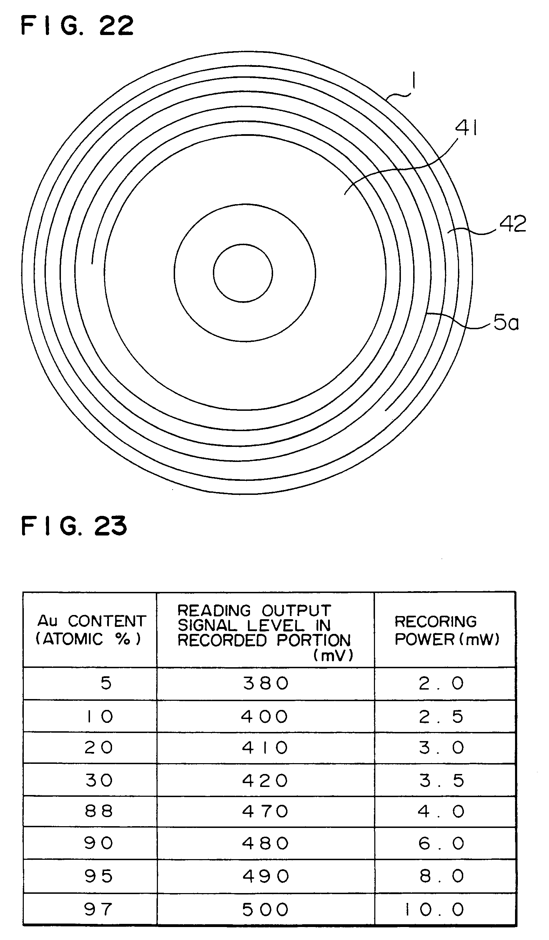

(8) In addition to the above Examples in which signal patterns 5a and 5b are formed in nearly all of the substrate 1 area so that data can be written once, the recording area of the substrate 1 can be divided into a ROM area 41 in which ROM data is recorded in a prepit form suitable for the CD format and a write once area 42 in which the above signal pattern is formed for writing data once, as is shown in Fig. 22.

More specific Experiment Examples are described below to make clear the effects of the present invention.

Experiment Example 1

A polycarbonate substrate having a diameter of 12 cm and a thickness of 1.2 mm was placed in a magnetron sputtering apparatus having a plurality of targets, which was excellent in uniformity of film thickness and reproducibility. And, a recording layer, i.e. a thin film having a thickness of about 80 nm and a composition of $Au_{70}Ge_{30}$ was formed on the substrate. Then, a protection layer having a thickness of 100 $\mu$m was formed on the thin film from a UV-curable resin.

With the above-obtained optical disk, data was recorded and played back under the following conditions. At first, while the linear velocity of the optical disk was set at 1.2 m/s, the light of a semiconductor laser (wavelength 780 nm) was maintained at a level (about 1 mW) at which no recording was carried out. This light was converged through a lens in a recording head to irradiate the recording layer through the substrate, and while reflected light was detected, a recording head was actuated such that the center of a light spot was focused on a tracking guide groove. While the tracking was conducted as above, te automatic focussing was conducted so as to focus on the recording layer, and the medium was irradiated with the laser light to form pits. Thereafter, while the tracking and the automatic focussing were conducted in the same manner as in the recording time, data was read by detecting the intensity of reflected light with a semiconductor laser having a low power used for the recording.

In this Experiment Example, when the reading light power was set at 1 mW, the mirror portion of the disk gave a signal intensity of about 450 mV, which was nearly at the same level as that of CD. Further, when a signal (11T signal) having a frequency of 196 KHz was recorded with a recording power of 7 mW, a signal modulation factor of about 70% was obtained.

A test piece having a track on which the above recording was conducted was taken out from the disk, and immersed in tetrahydrofuran to dissolve the polycarbonate, whereby the recording layer alone was obtained. The test piece was observed with a transmission electron microscope to show that the unrecorded portion was in a crystalline state and the recorded portion was in an amorphous state. Further, the recording layer alone was removed from a test piece containing a recorded track, and the remainder was observed with a scanning electron microscope to show that the recorded portion of the substrate was deformed. As described above, the recording was conducted by causing a change in the atomic arrangement in the recording layer and a deformation of the substrate, whereby a high signal modulation factor was obtained, which is one of the features of the present invention.

Data was also recorded between adjacent guide grooves in the same manner as in the recording on the guide groove, whereby similar characteristics were obtained. However, the signal modulation factor was a little smaller than that obtained in the recording on the groove.

The medium in this Experiment Example was also excellent in environmental resistance, i.e. The medium showed almost no change in te reflectance and transmissivity even after it had been placed under an environment having an ambient temperature of $80^\circ$C and a relative humidity of 90% for 1,000 hours.

In addition, when part or all of the Au content was replaced with at least one element of Ag, Cu and Al, very similar characteristics were obtained. And, when part or all of the Ge content was replaced with at least one element of Si and Sn, very similar characteristics were obtained.

Further, when a reflection layer was formed on that side of the recording layer which was opposite to the substrate, reading output signal was improved. And, when an intermediate layer was formed between the recording layer and the above reflection layer, the recording sensitivity was improved. In particular, the intermediate layer having the composition near to one of the following or a mixture thereof exhibited an effect: $CeO_2$, $La_2O_3$, $SiO$, $SiO_2$, $In_2O_3$, $Al_2O_3$, $GeO$, $GeO_2$, $PbO$, $SnO$, $SnO_2$, $Bi_2O_3$, $TeO_2$, $Ta_2O_5$, $Sc_2O_3$, $Y_2O_3$, $TiO_2$, $ZrO_2$, $V_2O_5$, $Nb_2O_5$, $Cr_2O_3$, $WO_2$, $WO_3$, $CdS$, $ZnS$, $CdSe$, $ZnSe$, $In_2S_3$, $In_2Se_3$, $Sb_2S_3$, $Sb_2Se_3$, $Ga_2S_3$, $Ga_2Se_3$, $GeS$, $GeSe$, $GeSe_2$, $SnS$, $SnS_2$, $SnSe$, $SnSe_2$, $PbS$, $PbSe$, $Bi_2Se_3$, $Bi_2S_3$, $MgF_2$, $CeF_3$, $CaF_2$, $TaN$, $Si_3N_4$, $AlN$, $BN$, $Si$, $TiB_2$, $B_4$, $SiC$, B and C.

Further, when a polyolefin, epoxy or acrylic resin substrate on which a signal pattern of a guide groove, etc., had been directly formed was used in place of the polycarbonate substrate, nearly the same results as above were also obtained.

Experiment Example 2

A polycarbonate substrate having a diameter of 12 cm and a thickness of 1.2 mm was placed in a magnetron sputtering apparatus which was excellent in uniformity of film thickness and reproducibility, and a recording layer, i.e. a thin film having a thickness of about 30 nm and a composition of $Au_{70}Ge_{30}$ was formed on the substrate.

With the above-obtained optical disk, data was recorded and read under the following conditions. At first, while the linear velocity of the optical disk was set at 1.2 m/s, the light of a semiconductor laser (wavelength 780 nm) was maintained at a level (about 1 mW) at which no recording was conducted. This light was converged through a lens in a recording head to irradiate the recording layer through the substrate, and while reflected light was detected, the automatic focussing was conducted so as to focus on the recording layer. While the automatic focussing was conducted as above, the tracking was conducted by actuating the head such that the center of a light spot was focussed on the tracking guide groove, and the guide groove was irradiated with the laser light to form a high reflectance portion. Thereafter, while the tracking and the automatic focussing were conducted in the same manner as in the recording time, data was read by detecting the intensity of reflected light with a semiconductor laser having a low power.

In this Experiment Example, when the reading light power was set at 1 mW, a signal intensity of about 120 mV was obtained. When a signal (11T signal) having a frequency of 196 KHz was recorded with a recording power of 7 mW, the reading intensity at the recording portion was about 450 mV, which was nearly at the same level as that of commercially available CDs. The reading intensity at the mirror portion of this disk was about 400 mV.

Further, when a signal of 720 KHz (3T signal) was recorded, the resultant signal amplitude was 150 mW. In this case, the recording pulse width was decreased, whereby the reading signal waveform became more symmetrical, and the signal amplitude was also improved.

A test piece containing a track on which the 3T signal had been recorded was taken from the disk, and immersed in tetrahydrofuran to dissolve polycarbonate, and the recording layer alone was obtained. The recording layer was observed with a transmission electron microscope to show that its unrecorded portion was in a crystalline state in which the crystal grain diameter was small and its recorded portion was in a crystalline state in which the crystal grain diameter was large. In the recorded portion, the recording layer had once fused and then crystallized during the cooling step, and the crystal therefore grown radially.

The length and width of the crystal were both about 1.5 $\mu$m. Further, a test piece containing a recorded track was immersed in aqua regia to remove the recording layer alone. The remainder was observed with a scanning electron microscope to show that the guide groove in the recorded portion was deformed to a flat form. The flat form had a length of about 0.8 $\mu$m and a width of about 0.7 $\mu$m. Another test piece which had been immersed in aqua regia for a loner period of time was also observed with a scanning electron microscope to show a pit having a length of about 0.8 $\mu$m and a width of about 0.7 $\mu$m. This pit was a cavity formed in the substrate during the recording. Thus, not only the guide groove was deformed, but also a change in the atomic arrangement was caused in the recording layer, whereby a larger signal modulation factor was obtained.

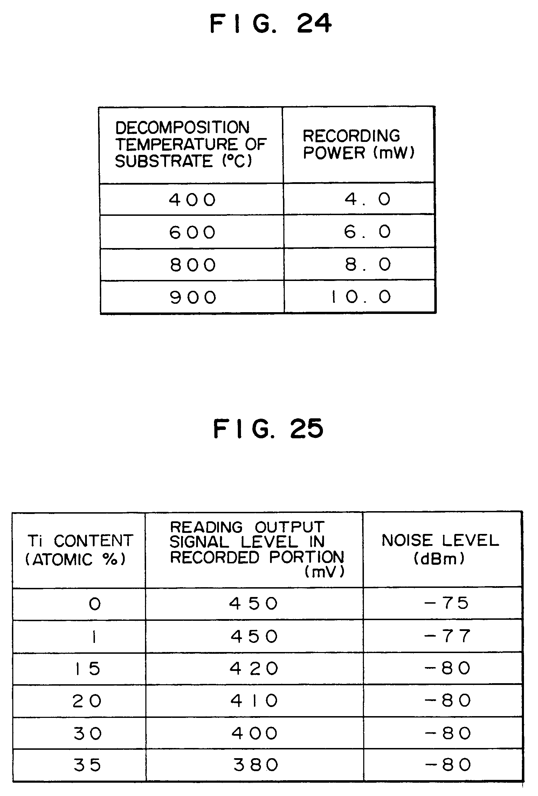

When te Au content (atomic %) in the above recording layer was changed, the reading output signal level (mW) and the recording power (mW) in the recorded portion changed as shown in Fig. 23. Further, when substrates having a different decomposition temperature ($^\circ$C) were used in the above medium, the recording power (mW) was changed as shown in Fig. 24. Furthermore, when Ti in a variety of amounts was used in the above recording layer while the constant ratio between the Au and Sn contents was maintained, the reading output signal level (mW) and the noise level (dBm) in the recorded portion changed as shown in Fig. 25.

The medium obtained in this Experiment Example was excellent in environmental resistance, or the medium showed almost no change in the reflectance and transmissivity even after it had been placed under an environment having an ambient temperature of 80$^\circ$C and a relative humidity of 90% for 1,000 hours.

In addition, when part or all of the Au content was replaced with at least one element of Ag, Cu and Al, very similar characteristics were obtained. When part or all of the Sn content was replaced with at least one element of Ge and Si, very similar characteristics were also obtained. When part of all of the Sn content was replaced with at least one element of Pb, Ga, In, Tl, Sb, Bi and Zn, very similar characteristics were also obtained. In this case, however, the resultant medium had a little low reflectance or recording sensitivity.

Further, an optical data recording medium was prepared in the same manner as in the preparation of the above optical data recording medium except that a hot-melt adhesive layer was formed on the recording layer with a roll coater and that a protection film having a thickness of about 100 $\mu$m was formed from a UV-curable resin by a spin coating method. This optical recording medium gave very similar characteristics, although it showed a little low recording sensitivity. When the above process was also repeated except that a thermoplastic resin and a paraffin were respectively used in place of the above hot-melt adhesive, the resultant optical data recording media showed very similar characteristics.

Further, when a reflection layer was formed on that side of the recording layer which was opposite to the substrate, the reading output signal was improved. And, when an intermediate layer was formed between the recording layer and the above reflection layer, the recording sensitivity was improved. In particular, the intermediate layer having the composition near to one of the following or a mixture thereof exhibited an effect: $CeO_2$, $La_2O_3$, $SiO$, $SiO_2$, $In_2O_3$, $Al_2O_3$, $GeO$, $GeO_2$, $PbO$, $SnO$, $SnO_2$, $Bi_2O_3$, $TeO_2$, $Ta_2O_5$, $Sc_2O_3$, $Y_2O_3$, $TiO_2$, $ZrO_2$, $V_2O_5$, $Nb_2O_5$, $Cr_2O_3$, $WO_2$, $WO_3$, $CdS$, $ZnS$, $CdSe$, $ZnSe$, $In_2S_3$, $In_2Se_3$, $Sb_2S_3$, $Sb_2Se_3$, $Ga_2S_3$, $Ga_2Se_3$, $GeS$, $GeSe$, $GeSe_2$, $SnS$, $SnS_2$, $SnSe$, $SnSe_2$, $PbS$, $PbSe$, $Bi_2Se_3$, $Bi_2S_3$, $MgF_2$, $CeF_3$, $CaF_2$, $TaN$, $Si_3N_4$, $AlN$, $BN$, $Si$, $TiB_2$, $B_4$, $SiC$, $B$ and $C$.

Further, when a polyolefin, epoxy or acrylic resin substrate on which a signal pattern of a guide groove, etc., had been directly formed was used in place of the polycarbonate substrate, nearly the same results as above were also obtained.

According to the present invention, there is provided an optical recording medium which permits recording of signals which can be played back with a CD player and a VD player, and which has excellent weatherability and high reliability.

## Claims

1.  An optical data recording medium comprising a single-layered or multi-layered thin film which contains at least a recording layer and is supported on a single surface of a substrate, the recording layer having an alloy portion comprising at least one element selected from the group consisting of Au, Ag, Al and Cu at least in part of the film surface direction, and being formed on the above signal surface of the substrate directly or through a thermal deformation layer composed of a substance having lower heat resistance than the substrate.

2. A medium according to claim 1, wherein the recording layer is formed of a uniformly composed alloy which comprises at least one element selected from the group consisting of Au, Ag, Al and Cu, and at least one element selected from the group consisting of Ge, Si, Sn, Pb, Ga, In, Tl, Sb, Bi and Zn.

3. A medium according to claim 1, wherein the recording layer is formed of a material which is an alloy comprising at least one element selected from the group consisting of Au, Ag, Al and Cu, and at least one element selected from the group consisting of Ge, Si, Sn, Pb, Ga, In, Tl, Sb, Bi and Zn, and which has a composition changed in the film thickness direction.

4. A medium according to claim 1, wherein the recording layer is formed of a laminate having a thin film which comprises at least one element selected from the group consisting of Au, Ag, Al and Cu, and a thin film which comprises at least one element selected from the group consisting of Ge, Si, Sn, Pb, Ga, In, Tl, Sb, Bi and Zn.

5. A medium according to claim 1, wherein the recording layer is formed from a material containing at least one element selected from the group consisting of Au, Ag, Al and Cu, and either at least one element selected from the group consisting of N, O, H, He, Ne, Ar, Kr and Xe or at least one element selected from the group consisting of B, C and P.

6. A medium according to claim 1, wherein the recording layer is formed from a material which comprises at least one element selected from the group consisting of Au, Ag, Al and Cu, and at least one element selected from the group consisting of Ge, Si, Sn, Pb, Ga, In, Tl, Sb, Bi and Zn, and which further contains either at least one element selected from the group consisting of N, O, H, He, Ne, Ar, Kr and Xe or at least one element selected from the group consisting of B, C and P.

7. A medium according to claim 5 or claim 6, wherein the recording layer is formed from the material having a uniform composition.

8. A medium according to claim 5 or claim 6, wherein the recording layer is formed from the material having a composition changed in a film thickness direction.

9. A medium according to claim 5 or claim 6, wherein the recording layer is formed of a laminate having a thin film composed of at least one element selected from the group consisting of Au, Ag, Al and Cu, and a thin film composed of at least one element selected from the group consisting of Ge, Si, Sn, Pb, Ga, In, Tl, Sb, Bi and Zn, at least one layer of the laminate being composed of a material containing either at least one element selected from the group consisting of N, O, H, He, Ne, Ar, Kr and Xe or at least one element selected from the group consisting of B, C and P.

10. A medium according to claim 1, wherein the recording layer is formed from a material containing at least one element selected from the group consisting of Au, Ag, Al and Cu, and at least one element selected from the group consisting of Sc, Ti, V, Cr, Mn, Fe, Co, Ni, Y, Zr, Nb, Mo, Tc, Ru, Rh, Pd, Cd, Hf, Ta, W, Re, Os, Ir and Pt.

11. A medium according to claim 1, wherein the recording layer is formed from a material which comprises at least one element selected from the group consisting of Au, Ag, Al and Cu, and at least one element selected from the group consisting of Ge, Si, Sn, Pb, Ga, In, Tl, Sb, Bi and Zn, and which further contains at least one element selected form the group consisting of Sc, Ti, V, Cr, Mn, Fe, Co, Ni, Y, Zr, Nb, Mo, Tc, Ru, Rh, Pd, Cd, Hf, Ta, W, Re, Os, Ir and Pt.

12. A medium according to claim 10 or claim 11, wherein the recording layer is formed from the material having a uniform composition in a film thickness direction.

13. A medium according to claim 10 or claim 11, wherein the recording layer is formed from the material having a composition changed in a film thickness direction.

14. A medium according to claim 10 or claim 11, wherein the recording layer is formed of a laminate having a thin film comprising at least one element selected from the group consisting of Au, Ag, Al and Cu, and a thin film comprising at least one element selected from the group consisting of Ge, Si, Sn, Pb, Ga, In, Tl, Sb, Bi and Zn, at least one layer of the laminate being formed from a material containing at least one element selected from the group consisting of Sc, Ti, V, Cr, Mn, Fe, Co, Ni, Y, Zr, Nb, Mo, Tc, Ru, Rh, Pd, Cd, Hf, Ta, W, Re, Os, Ir and Pt.

15. A medium according to claim 1, which, when light energy in a pulse form is scanned along a record track preformated in the signal surface of the substrate, produces a deformation of the signal surface of the substrate scanned with high-level light energy or that surface of the thermal deformation layer which is in contact with the recording layer and also causes a change in an atomic arrangement at least in that part of the recording layer which is in contact such a deformation portion, whereby data is written once on the basis of a difference between a reflectance of a portion scanned with high-level light energy and a reflectance of a portion scanned with low-level light energy.

16. A medium according to claim 1, which, when light energy in a pulse form is scanned along a record track preformated in the signal surface of the substrate, produces a deformation of the signal surface of the substrate scanned with high-level light energy or that surface of the thermal deformation layer which is in contact with the recording layer and also causes a fusion-induced mixing phenomenon or diffusion at least in that part of the recording layer which is in contact such a deformation portion, whereby data is written once on the basis of a difference between a reflectance of a portion scanned with high-level light energy and a reflectance of a portion scanned with low-level light energy.

17. A medium according to claim 1, which, when light energy in a pulse form is scanned along a record track preformated in the signal surface of the substrate, produces a deformation of the signal surface of the substrate scanned with high-level light energy or that surface of the thermal deformation layer which is in contact with the recording layer and also causes a deformation at least in that part of the recording layer which is in contact such a deformation portion, whereby data is written once on the basis of a difference between a reflectance of a portion scanned with high-level light energy and a reflectance of a portion scanned with low-level light energy.

18. A medium according to claim 1, which, when light energy in a pulse form is scanned along a record track preformated in the signal surface of the substrate, produces a deformation of the signal surface of the substrate scanned with high-level light energy or that surface of the thermal deformation layer which is in contact with the recording layer and also produces a cavity, a void or a hole as a recording element at least in an interior of the substrate or thermal deformation layer being in contact with such a deformation portion, between either the substrate or the thermal deformation layer and the recording layer or in an interior of the recording layer, whereby data is written once on the basis of a difference between a reflectance of a portion scanned with high-level light energy and a reflectance of a portion scanned with low-level light energy.

19. A medium according to claim 1, which, when light energy in a pulse form is scanned along a record track preformated in the signal surface of the substrate, produces a cavity at least between that portion of the substrate and that portion of the recording layer which have been scanned with high-level light energy or in an interior of the recording layer without any deformation of the substrate, whereby data is written once on the basis of a difference between a reflectance of a portion scanned with high-level light energy and a reflectance of a portion scanned with low-level light energy.

20. A medium according to claim 1, wherein the recording layer satisfies at least one of the three conditions that the melting point is not more than $1,000\,°C$, that the thermal conductivity is not more than $50\ W/m\cdot K$ and that the light absorptivity is not less than 15%.

21. A medium according to claim 1, wherein a reflection layer having a higher reflectance to reading light than the recording layer is formed on the surface of the recording layer which is formed on the substrate.

22. A medium according to claim 1, wherein an intermediate layer of an inorganic layer and a reflection layer having a higher reflectance to reading light than the recording layer are consecutively formed on the surface of the recording layer which is formed on the substrate.

23. A medium according to claim 1, wherein the substrate or the thermal deformation layer is formed from a substance having a heat decomposition temperature of not more than $800\,°C$.

24. A medium according to claim 1, wherein an organic dye compound layer is formed in an interface between either the substrate or the thermal deformation layer and the recording layer.

25. A method of recording an reading data, which comprises recording data by scanning an optical data recording medium produced by forming a recording layer having an alloy portion comprising at least one element selected from the group consisting of Au, Ag, Al and Cu at least in part of the film surface direction on a signal surface of a substrate directly or through the thermal deformation layer composed of a substance having lower heat resistance than the substrate with recording light energy of which the intensity is modulated in a pulse form, thereby transducing the light energy to heat energy in the recording layer, deforming a signal surface of the substrate scanned with high-level light energy or that surface of the thermal deformation layer which is in contact with the recording layer with the heat energy, and at the same time, causing a thermal change such as a change in an atomic arrangement, a fusion-induced mixing phenomenon, a deformation or formation of a cavity, a void or a hole as a recording element at least in part of the recording layer which is in contact with such a deformation portion to produce a difference between a reflectance of a portion scanned with high-level light energy and a reflectance of a portion scanned with low-level light energy, and playing back the data by scanning light energy being at a low level and having a constant intensity along a recorded track to optically read out a change in reflectance taking place together with the thermal change of the recording layer and a change in the substrate or the thermal deformation layer.

26. A data recording apparatus having a medium actuation portion in which an optical data recording medium is removably set and actuated, and an optical head which scans intensity-modulated light energy in a pulse form along a recorded track preformated on the above optical data recording medium, wherein an optical data recording medium in which a recording layer having an alloy portion comprising at least one element selected from the group consisting of Au, Ag, Al and Cu at least in part in the film surface direction is formed on a signal surface of a substrate directly or through a thermal deformation layer composed from a substance having lower heat resistance than the substrate is set at the above medium actuation portion, the intensity of high-level light energy from the above optical head is so adjusted as to have a strength to deform the signal surface of the above substrate or the surface of the above thermal deformation layer which is in contact with the recording layer and also to cause a thermal change such as a change in an atomic arrangement, a fusion-induced mixing phenomenon, a deformation or formation of a cavity, a void or a hole as a recording element at least in part of the recording layer which is in contact with such a deformation portion, and the intensity of low-level light energy from the above optical head is adjusted so as not to cause any thermal change in the above substrate and recording layer.

# F I G. 1

# F I G. 2

# FIG. 3A

## FIG. 3B

S

d

5a

S

d

5a

# FIG. 4

GROOVE
WIDTH

SIGNAL MODULATION FACTOR (%)

100

50

0.2 μm

0.9 μm

1.2 μm

O

$\lambda/8n$

$\lambda/3n$

GROOVE DEPTH

FIG. 5

FIG. 6

FIG. 7

FIG. 8

FIG. 9

# F I G. IO

# F I G. II

(a)   O  I  O  O  I  I  I  O   I  I  I  I  O  O  I  O   O
      0 I 0 0 0 0 I 0 0 I 0 0 0 I 0 0 0 0 0 0 0 0 0 I 0 0 0 I 0 0 I 0 0 I

(b)

(c)

(d)

(e)

(f)

# F I G. 12

# F I G. 13

# F I G. 14

# FIG. 15

5a(32)   5a(31)   5a(32)

3

1

# FIG. 16

5a   5a   5a

32   31   32

A

3

1

# FIG. 17

5a   31   5a   32   5a

A   31

A

3

1

# F I G. 18A

# F I G. 18B

# F I G. 18C

# F I G. 19

5a

3

1

REFLECTED
LIGHT

INCIDENT
LIGHT

REFLECTED
LIGHT

INCIDENT
LIGHT

REFLECTED
LIGHT

INTERFERENCE

# F I G. 20A

3

1

A

INCIDENT
LIGHT

REFLECTED
LIGHT

INTERFERENCE

# F I G. 20B

3

1

A

INCIDENT
LIGHT

REFLECTED
LIGHT

INTERFERENCE

# F I G. 20C

3

1

A

INCIDENT
LIGHT

REFLECTED
LIGHT

INTERFERENCE

F I G. 21

# FIG. 22

# FIG. 23

| Au CONTENT (ATOMIC %) | READING OUTPUT SIGNAL LEVEL IN RECORDED PORTION (mV) | RECORING POWER (mW) |
|---|---|---|
| 5 | 380 | 2.0 |
| 10 | 400 | 2.5 |
| 20 | 410 | 3.0 |
| 30 | 420 | 3.5 |
| 88 | 470 | 4.0 |
| 90 | 480 | 6.0 |
| 95 | 490 | 8.0 |
| 97 | 500 | 10.0 |

# FIG. 24

| DECOMPOSITION TEMPERATURE OF SUBSTRATE (°C) | RECORDING POWER (mW) |
|---|---|
| 400 | 4.0 |
| 600 | 6.0 |
| 800 | 8.0 |
| 900 | 10.0 |

# FIG. 25

| Ti CONTENT (ATOMIC %) | READING OUTPUT SIGNAL LEVEL IN RECORDED PORTION (mV) | NOISE LEVEL (dBm) |
|---|---|---|
| 0 | 450 | −75 |
| 1 | 450 | −77 |
| 15 | 420 | −80 |
| 20 | 410 | −80 |
| 30 | 400 | −80 |
| 35 | 380 | −80 |

## DOCUMENTS CONSIDERED TO BE RELEVANT

EP 91202277.9

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN, unexamined applications, P field, vol. 14, no. 114, March 2, 1990 THE PATENT OFFICE JAPANESE GOVERNMENT page 63 P 1015 * Kokai-no. 1-311 432 (DAICEL CHEM IND LTD) * | 1-4 | G 11 B 7/24 G 11 B 7/26 |
| A | | 5-26 | |
| X | US - A - 4 904 577 (TYAN et al.) * Abstract; claims 1-5 * | 1-4 | |
| A | | 5-26 | |
| D,A | PATENT ABSTRACTS OF JAPAN, unexamined applications, P field, vol. 12, no. 32, January 30, 1988 THE PATENT OFFICE JAPANESE GOVERNMENT page 21 P 661 * Kokai-no. 62-183 042 (TOSHIBA CORP) * | 1,25, 26 | |

TECHNICAL FIELDS SEARCHED (Int. Cl.5)

G 11 B 7/00
C 22 C 30/00
C 22 C 12/00
B 41 M 5/00

The present search report has been drawn up for all claims

| Place of search | Date of completion of the search | Examiner |
|---|---|---|
| VIENNA | 20-11-1991 | BERGER |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                              
& : member of the same patent family, corresponding
document